# EUROPEAN PATENT APPLICATION

(11) **EP 4 206 892 A1**
(43) Date of publication of application: **05.07.2023**
(21) Application number: 21872952.3
(22) Date of filing: 24.09.2021
(51) Int. Cl.: G06F 3/0489, G06F 3/023, G06F 3/0481, G06F 3/0484, G06F 3/0488

(54) **EMOJI RECOMMENDATION METHOD OF ELECTRONIC DEVICE AND SAME ELECTRONIC DEVICE**

(30) Priority: 25.09.2020 KR 20200125123
(71) Applicant: Samsung Electronics Co., Ltd., Suwon-si, Gyeonggi-do 16677 (KR)
(72) Inventor: JEON, Hayoung, Suwon-si Gyeonggi-do 16677 (KR); KIM, Jiwon, Suwon-si Gyeonggi-do 16677 (KR); MOON, Minjung, Suwon-si Gyeonggi-do 16677 (KR); YOON, Seoyoung, Suwon-si Gyeonggi-do 16677 (KR); LEE, Sookkyung, Suwon-si Gyeonggi-do 16677 (KR); HEO, Jiyoon, Suwon-si Gyeonggi-do 16677 (KR); LEE, Won, Suwon-si Gyeonggi-do 16677 (KR)
(74) Representative: Gulde & Partner
(86) International application number: PCT/KR2021/013057
(87) International publication number: WO 2022/065924

(57) **Abstract**

Disclosed is an electronic device comprising: a display; a memory for storing an input pattern including multiple emojis; and a processor electrically connected to the display and the memory, wherein the processor displays, on the display, a user interface including an input field, a recommendation field, and a character field, detects a first input to select a first emoji, among the multiple emojis, which is displayed in a first recommendation area among multiple recommendation areas included in the recommendation field, and in response to the detection of the first input: outputs the first emoji to the input field, and replaces an item displayed in the first recommendation area, with a second emoji next to the first emoji in the input pattern.

## Description

### [Technical Field]

Various embodiments provided in the disclosure relate to a method of recommending an emoji according to an input pattern stored in advance in an electronic device, and an electronic device thereof.

### [Background Art]

Most portable electronic devices such as a smartphone, a tablet PC, and the like include a function of inputting text, and for ease and convenience of inputting text, methods of inputting text at once without selecting each of the characters included in the text are being developed. For example, an electronic device may include a function of recommending, based on a character string input by a user, a word that is expected to be subsequently input by a normal user. The user may not need to inconveniently find and select every character included in a word by selecting a recommended word displayed in a display of the electronic device, which is advantageous.

Most electronic devices have a function of inputting an emoji and/or emoticon in addition to text, and users of the electronic devices may effectively express intention by using emojis and/or emoticons. An emoji is an emotional pictogram and is capable of expressing emotion with only an image, unlike an emoticon that expresses emotion in combination with text.

### [Disclosure of Invention]

### [Technical Problem]

A function that displays a recommended item expected to be subsequently input by a user in an electronic device may output a recommended word based on data obtained by accumulating and analyzing character strings generally input by a plurality of anonymous users. Therefore, there is a desire for a function of outputting a character (or a pictogram) based on personalized information obtained by accumulating and analyzing data input by a predetermined user.

In addition, in the function that displays a recommended item that is expected to be subsequently input by a user of an electronic device, a recommended item is limited to only a single word, a single special character, a single number, or a combination thereof. Therefore, there is a desire for a function of sequentially outputting a series of recommended emojis that are expected to be subsequentially input by a user.

Various embodiments of the disclosure may provide an electronic device that recognizes a usage pattern of emojis input by a user, and displays emojis in a personalized order in a predetermined area of a display one by one.

### [Solution to Problem]

An electronic device according to an embodiment may include a display, a memory storing an input pattern including a plurality of emojis, and a processor electrically connected to the display and the memory, and the processor may be configured to display, in the display, a user interface including an input field, a recommendation field, and a character field, to detect a first input that selects a first emoji displayed in a first recommendation area among a plurality of recommendation areas included in the recommendation field, from among the plurality of emojis, to output the first emoji to the input field in response to detection of the first input, and to replace an item displayed in the first recommendation area with a second emoji subsequent to the first emoji in the input pattern.

An emoji recommendation method by an electronic device according to an embodiment may include an operation of displaying, in a display of the electronic device, a user interface including an input field, a recommendation field, and a character field, an operation of detecting a first input that selects a first emoji displayed in a first recommendation area among a plurality of recommendation areas included in the recommendation field, from among a plurality of emojis included in an input pattern stored in a memory of the electronic device, an operation of outputting the first emoji to the input filed in response to the detection of the first input, and an operation of replacing an item displayed in the first recommendation area with a second emoji subsequent to the first emoji in the input pattern in response to the detection of the first input.

An electronic device according to an embodiment may include a display, a memory storing an input pattern including a plurality of emojis together with information associated with an input context, and a processor electrically connected to the display and the memory, and the processor may be configured to display a user interface including an input field, a recommendation field, and a character field, to detect a first input that selects a first emoji displayed in a first recommendation area included in the recommendation field, from among the plurality of emojis, in the input context, to output the first emoji to the input field in response to the detection of the first input in the input context, and to replace an item displayed in the first recommendation area with a second emoji subsequent to the first emoji in the input pattern.

### [Advantageous Effects of Invention]

According to various embodiments of the disclosure, based on an input pattern of emojis stored in advance in an electronic device, emojis are sequentially replaced and output to a predetermined area of a display of an electronic device, and thus a user may not need to find an emoji to input from a character field and may have convenience for the user when inputting an emoji.

According to various embodiments of the disclosure, an electronic device may recommend emojis different for each input context by storing an input pattern including a plurality of emojis together with information associated with an input context (or information associated with a usage environment) in a memory of the electronic device.

In addition, various effects directly or indirectly recognized from the document may be provided.

### [Brief Description of Drawings]

FIG. 1 is a block diagram of an electronic device in a network environment according to various embodiments.
FIG. 2 is a block diagram of an electronic device according to an embodiment.
FIG. 3 is a diagram illustrating the state in which an electronic device displays a user interface including an input field, a recommendation field, and a character field in a display according to an embodiment.
FIG. 4 is a flowchart illustrating a method of recommending an emoji by an electronic device according to an embodiment.
FIG. 5 shows diagrams illustrating a method of recommending an emoji according to an input pattern stored in an electronic device according to an embodiment.
FIG. 6 shows diagrams illustrating a method of recommending an emoji according to an input pattern stored in an electronic device according to an embodiment.
FIG. 7 is a flowchart illustrating a method of recommending an emoji based on attribute information stored together with an input pattern, by an electronic device according to an embodiment.
FIG. 8A is a diagram illustrating a method of recommending, based on attribute information stored together with an input pattern, an emoji in response to detection of input of a word associated with attribute information, by an electronic device according to an embodiment.
FIG. 8B is a diagram illustrating a method of recommending, based on attribute information stored together with an input pattern, an emoji in response to detection of input of a word associated with attribute information, by an electronic device according to an embodiment.
FIG. 9 shows diagrams illustrating a method of recommending, based on attribute information stored together with an input pattern, an emoji in response to detection of input of a different emoji having attribute information same as or similar to the attribute information, by an electronic device according to an embodiment.
FIG. 10A is a diagram illustrating a method of recommending an emoji based on user input and an input pattern stored in an electronic device according to an embodiment.
FIG. 10B is a diagram illustrating a method of recommending an emoji based on user input and an input pattern stored in an electronic device according to an embodiment.
FIG. 11 is a flowchart illustrating a method of recommending an emoji based on an input context and an input pattern stored in an electronic device according to an embodiment.
FIG. 12A is a diagram illustrating a method of recommending an emoji based on an input context and an input pattern stored in an electronic device according to an embodiment.
FIG. 12B is a diagram illustrating a method of recommending an emoji based on an input context and an input pattern stored in an electronic device according to an embodiment.
FIG. 12C is a diagram illustrating a method of recommending an emoji based on an input context and an input pattern stored in an electronic device according to an embodiment.
FIG. 13 is a flowchart illustrating a method of storing a plurality of emojis as a single input pattern together with input context information and attribute information, by an electronic device according to an embodiment.
FIG. 14 is a diagram illustrating a method of detecting a plurality of emojis input inconsecutively in a single section of text and storing the same as a single input pattern, by an electronic device according to an embodiment.

Identical or like reference numerals in the drawings denote identical or like elements.

### [Mode for Carrying out the Invention]

Hereinafter, various embodiments of the disclosure will be described with reference to the accompanying drawings. For ease of description, component elements illustrated in the drawings may be drawn in an exaggerated or reduced size, and the disclosure is not necessarily limited thereto.

Fig. # is a block diagram illustrating an electronic device #01 in a network environment #00 according to various embodiments.

Referring to Fig. #, the electronic device #01 in the network environment #00 may communicate with an electronic device #02 via a first network #98 (e.g., a short-range wireless communication network), or at least one of an electronic device #04 or a server #08 via a second network #99 (e.g., a long-range wireless communication network). According to an embodiment, the electronic device #01 may communicate with the electronic device #04 via the server #08. According to an embodiment, the electronic device #01 may include a processor #20, memory #30, an input module #50, a sound output module #55, a display module #60, an audio module #70, a sensor module #76, an interface #77, a connecting terminal #78, a haptic module #79, a camera module #80, a power management module #88, a battery #89, a communication module #90, a subscriber identification module(SIM) #96, or an antenna module #97. In some embodiments, at least one of the components (e.g., the connecting terminal #78) may be omitted from the electronic device #01, or one or more other components may be added in the electronic device #01. In some embodiments, some of the components (e.g., the sensor module #76, the camera module #80, or the antenna module #97) may be implemented as a single component (e.g., the display module #60).

The processor #20 may execute, for example, software (e.g., a program #40) to control at least one other component (e.g., a hardware or software component) of the electronic device #01 coupled with the processor #20, and may perform various data processing or computation. According to one embodiment, as at least part of the data processing or computation, the processor #20 may store a command or data received from another component (e.g., the sensor module #76 or the communication module #90) in volatile memory #32, process the command or the data stored in the volatile memory #32, and store resulting data in non-volatile memory #34. According to an embodiment, the processor #20 may include a main processor #21 (e.g., a central processing unit (CPU) or an application processor (AP)), or an auxiliary processor #23 (e.g., a graphics processing unit (GPU), a neural processing unit (NPU), an image signal processor (ISP), a sensor hub processor, or a communication processor (CP)) that is operable independently from, or in conjunction with, the main processor #21. For example, when the electronic device #01 includes the main processor #21 and the auxiliary processor #23, the auxiliary processor #23 may be adapted to consume less power than the main processor #21, or to be specific to a specified function. The auxiliary processor #23 may be implemented as separate from, or as part of the main processor #21.

The auxiliary processor #23 may control at least some of functions or states related to at least one component (e.g., the display module #60, the sensor module #76, or the communication module #90) among the components of the electronic device #01, instead of the main processor #21 while the main processor #21 is in an inactive (e.g., sleep) state, or together with the main processor #21 while the main processor #21 is in an active state (e.g., executing an application). According to an embodiment, the auxiliary processor #23 (e.g., an image signal processor or a communication processor) may be implemented as part of another component (e.g., the camera module #80 or the communication module #90) functionally related to the auxiliary processor #23. According to an embodiment, the auxiliary processor #23 (e.g., the neural processing unit) may include a hardware structure specified for artificial intelligence model processing. An artificial intelligence model may be generated by machine learning. Such learning may be performed, e.g., by the electronic device #01 where the artificial intelligence is performed or via a separate server (e.g., the server #08). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory #30 may store various data used by at least one component (e.g., the processor #20 or the sensor module #76) of the electronic device #01. The various data may include, for example, software (e.g., the program #40) and input data or output data for a command related thererto. The memory #30 may include the volatile memory #32 or the non-volatile memory #34.

The program #40 may be stored in the memory #30 as software, and may include, for example, an operating system (OS) #42, middleware #44, or an application #46.

The input module #50 may receive a command or data to be used by another component (e.g., the processor #20) of the electronic device #01, from the outside (e.g., a user) of the electronic device #01. The input module #50 may include, for example, a microphone, a mouse, a keyboard, a key (e.g., a button), or a digital pen (e.g., a stylus pen).

The sound output module #55 may output sound signals to the outside of the electronic device #01. The sound output module #55 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module #60 may visually provide information to the outside (e.g., a user) of the electronic device #01. The display module #60 may include, for example, a display, a hologram device, or a projector and control circuitry to control a corresponding one of the display, hologram device, and projector. According to an embodiment, the display module #60 may include a touch sensor adapted to detect a touch, or a pressure sensor adapted to measure the intensity of force incurred by the touch.

The audio module #70 may convert a sound into an electrical signal and vice versa. According to an embodiment, the audio module #70 may obtain the sound via the input module #50, or output the sound via the sound output module #55 or a headphone of an external electronic device (e.g., an electronic device #02) directly (e.g., wiredly) or wirelessly coupled with the electronic device #01.

The sensor module #76 may detect an operational state (e.g., power or temperature) of the electronic device #01 or an environmental state (e.g., a state of a user) external to the electronic device #01, and then generate an electrical signal or data value corresponding to the detected state. According to an embodiment, the sensor module #76 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface #77 may support one or more specified protocols to be used for the electronic device #01 to be coupled with the external electronic device (e.g., the electronic device #02) directly (e.g., wiredly) or wirelessly. According to an embodiment, the interface #77 may include, for example, a high definition multimedia interface (HDMI), a universal serial bus (USB) interface, a secure digital (SD) card interface, or an audio interface.

A connecting terminal #78 may include a connector via which the electronic device #01 may be physically connected with the external electronic device (e.g., the electronic device #02). According to an embodiment, the connecting terminal #78 may include, for example, a HDMI connector, a USB connector, a SD card connector, or an audio connector (e.g., a headphone connector).

The haptic module #79 may convert an electrical signal into a mechanical stimulus (e.g., a vibration or a movement) or electrical stimulus which may be recognized by a user via his tactile sensation or kinesthetic sensation. According to an embodiment, the haptic module #79 may include, for example, a motor, a piezoelectric element, or an electric stimulator.

The camera module #80 may capture a still image or moving images. According to an embodiment, the camera module #80 may include one or more lenses, image sensors, image signal processors, or flashes.

The power management module #88 may manage power supplied to the electronic device #01. According to one embodiment, the power management module #88 may be implemented as at least part of, for example, a power management integrated circuit (PMIC).

The battery #89 may supply power to at least one component of the electronic device #01. According to an embodiment, the battery #89 may include, for example, a primary cell which is not rechargeable, a secondary cell which is rechargeable, or a fuel cell.

The communication module #90 may support establishing a direct (e.g., wired) communication channel or a wireless communication channel between the electronic device #01 and the external electronic device (e.g., the electronic device #02, the electronic device #04, or the server #08) and performing communication via the established communication channel. The communication module #90 may include one or more communication processors that are operable independently from the processor #20 (e.g., the application processor (AP)) and supports a direct (e.g., wired) communication or a wireless communication. According to an embodiment, the communication module #90 may include a wireless communication module #92 (e.g., a cellular communication module, a short-range wireless communication module, or a global navigation satellite system (GNSS) communication module) or a wired communication module #94 (e.g., a local area network (LAN) communication module or a power line communication (PLC) module). A corresponding one of these communication modules may communicate with the external electronic device via the first network #98 (e.g., a short-range communication network, such as BluetoothTM, wireless-fidelity (Wi-Fi) direct, or infrared data association (IrDA)) or the second network #99 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module #92 may identify and authenticate the electronic device #01 in a communication network, such as the first network #98 or the second network #99, using subscriber information (e.g., international mobile subscriber identity (IMSI)) stored in the subscriber identification module #96.

The wireless communication module #92 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module #92 may support a high-frequency band (e.g., the mmWave band) to achieve, e.g., a high data transmission rate. The wireless communication module #92 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module #92 may support various requirements specified in the electronic device #01, an external electronic device (e.g., the electronic device #04), or a network system (e.g., the second network #99). According to an embodiment, the wireless communication module #92 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module #97 may transmit or receive a signal or power to or from the outside (e.g., the external electronic device) of the electronic device #01. According to an embodiment, the antenna module #97 may include an antenna including a radiating element composed of a conductive material or a conductive pattern formed in or on a substrate (e.g., a printed circuit board (PCB)). According to an embodiment, the antenna module #97 may include a plurality of antennas (e.g., array antennas). In such a case, at least one antenna appropriate for a communication scheme used in the communication network, such as the first network #98 or the second network #99, may be selected, for example, by the communication module #90 (e.g., the wireless communication module #92) from the plurality of antennas. The signal or the power may then be transmitted or received between the communication module #90 and the external electronic device via the selected at least one antenna. According to an embodiment, another component (e.g., a radio frequency integrated circuit (RFIC)) other than the radiating element may be additionally formed as part of the antenna module #97.

According to various embodiments, the antenna module #97 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adj acent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device #01 and the external electronic device #04 via the server #08 coupled with the second network #99. Each of the electronic devices #02 or #04 may be a device of a same type as, or a different type, from the electronic device #01. According to an embodiment, all or some of operations to be executed at the electronic device #01 may be executed at one or more of the external electronic devices #02, #04, or #08. For example, if the electronic device #01 should perform a function or a service automatically, or in response to a request from a user or another device, the electronic device #01, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device #01. The electronic device #01 may provide the outcome, with or without further processing of the outcome, as at least part of a reply to the request. To that end, a cloud computing, distributed computing, mobile edge computing (MEC), or client-server computing technology may be used, for example. The electronic device #01 may provide ultra low-latency services using, e.g., distributed computing or mobile edge computing. In another embodiment, the external electronic device #04 may include an internet-of-things (IoT) device. The server #08 may be an intelligent server using machine learning and/or a neural network. According to an embodiment, the external electronic device #04 or the server #08 may be included in the second network #99. The electronic device #01 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program #40) including one or more instructions that are stored in a storage medium (e.g., internal memory #36 or external memory #38) that is readable by a machine (e.g., the electronic device #01). For example, a processor (e.g., the processor #20) of the machine (e.g., the electronic device #01) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

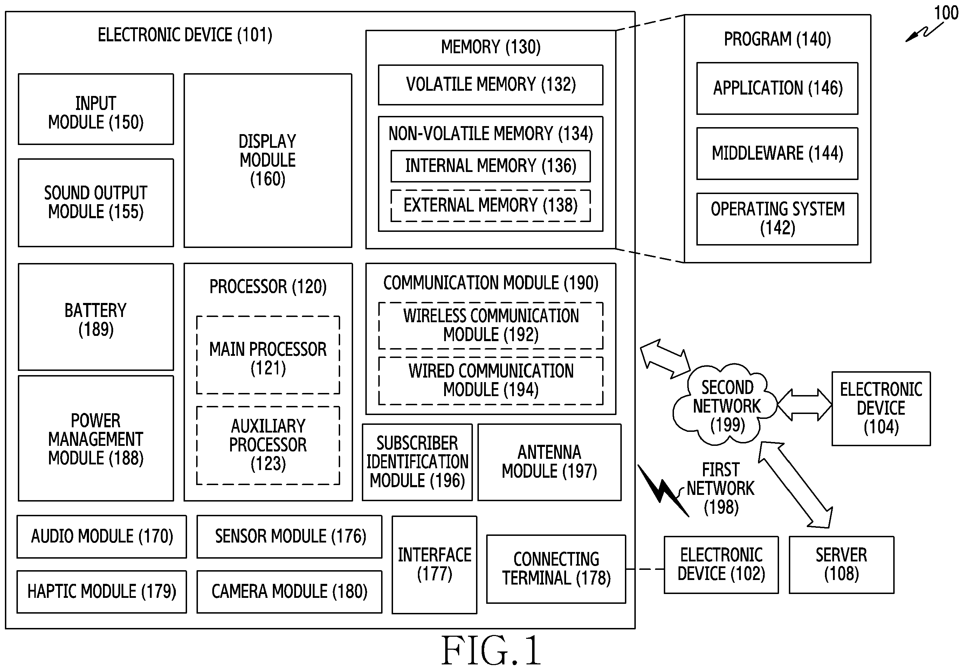

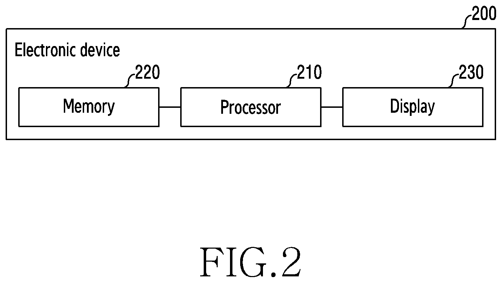

FIG. 2 is a block diagram illustrating an electronic device 200 (e.g., electronic device 101 of FIG. 1) according to an embodiment.

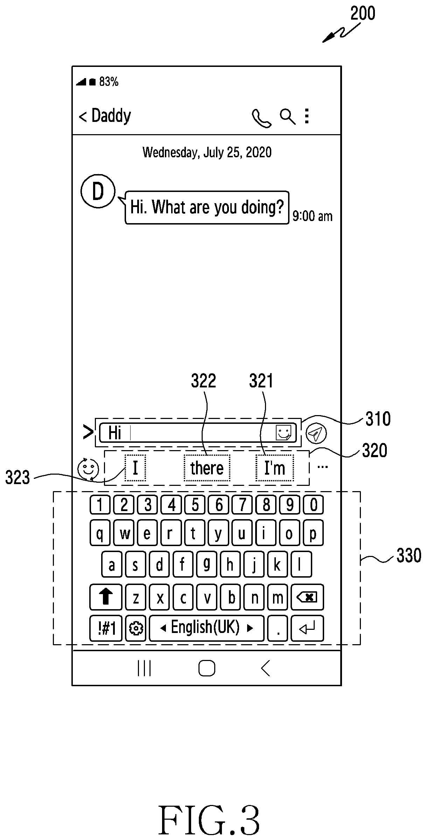

FIG. 3 is a diagram illustrating the state in which the electronic device 200 according to an embodiment displays a user interface including an input field 310, a recommendation field 320, and a character field 330 in a display 230 according to an embodiment.

Referring to FIG. 2, the electronic device 200 according to an embodiment may include a processor 210 (e.g., the processor 120 of FIG. 1), a memory 220 (e.g., the memory 130 of FIG. 1), and the display 230 (e.g., the display 160 of FIG. 1). The configuration of the electronic device 200 is not limited thereto, and the electronic device 200 may omit at least one of the above-described component elements or may further include at least one other component element. Hereinafter, component elements included in the electronic device 200 will be described.

According to an embodiment, the processor 210 may include a generic processor 210 which is configured to implement a hardware module or software (e.g., an application program). The processor 210 may control software elements (programs) or hardware elements (functions) including at least one from among various sensors included in the electronic device 200, a data management module, an input/output interface, a module for managing the state or environment of the electronic device 200, and a communication module.

According to an embodiment, the processor 210 may control at least one other component element of the electronic device 200, and may perform various types of data processing or operations. According to an embodiment, the processor 210 may be electrically connected to the memory 220 and the display 230, and may implement instructions stored in the memory 220. According to an embodiment, the processor 210 may implement an instruction stored in the memory 220, so that the electronic device 200 may recommend an emoji. The processor 210 may display a user interface including, for example, the input field 310, the recommendation field 320, and the character field 330 in the display 230 of the electronic device 200, may detect a first input that selects a first emoji displayed in a first recommendation area 321 included in the recommendation field 320 from among a plurality of emojis included in an input pattern stored in the memory 220 of the electronic device 200, may output the first emoji to the input field 310 in response to detection of the first input, and may replace an item displayed in the first recommendation area 321 with a second emoji subsequent to the first emoji in the input pattern in response to the detection of the first input.

According to an embodiment, the memory 220 may store various types of data (e.g., an input pattern including a plurality of emojis, input context information including a plurality of emojis, and attribute information of a plurality of emojis) used by at least one component element (e.g., the processor 210) of the electronic device 200. For example, data may include input data or output data associated with software (e.g., the program 140 of FIG. 1) and commands related thereto. The memory 220 may include volatile memory 220 or non-volatile memory 220.

According to an embodiment, in case that a plurality of emojis input by a user of the electronic device 200 in a predetermined order is repeatedly detected at least a predetermined threshold number of times, the plurality of emojis in the predetermined order may be stored as a single input pattern in the memory 220. In this instance, information associated with an input context (e.g., application type information, user account information, conversation partner information) in which the plurality of emojis are input or the attribute information of the plurality of emojis may be stored together with the input pattern in the memory 220.

According to an embodiment, the display 230 may visually provide information to the outside (e.g., a user) of the electronic device 200, and may display various types of contents (e.g., text, images, videos, icons, or symbols). For example, the display 230 may include a display panel, a hologram device, or a projector, and a control circuit (e.g., a display driver IC (DDI)) for controlling the corresponding device. According to an embodiment, the display 230 may include a touch circuit (touch circuitry) configured to sense a touch or a sensor circuit (e.g., a pressure sensor) configured to measure an intensity of force caused by a touch, and may receive a touch input, a gesture input, a proximity input, or a hovering input provided using an electronic pen or a body part of a user. According to an embodiment, at least a part of the display 230 may be formed of a flexible material, and the corresponding area may be bent when force is applied.

According to an embodiment, the display 230 may visually output, to a user, a user interface associated with an execution screen of an application that is being executed in the electronic device 200. For example, in case that a message application is being executed in the electronic device 200, the display 230 may display a user interface including the input field 310 to display an item that a user inputs, the recommendation field 320 to display an item expected to be subsequently input by a user, and the character field 330 to display characters selectable for inputting an item to the input field 310.

According to an embodiment, the display 230 may provide a screen in the form of a rectangular shape. According to various embodiments, the shape of a screen provided by the display 230 is not limited to a rectangular shape, and may include, depending on the type or design of the electronic device 200, a rounded edged-quadrangular shape, a circular shape, a quadrangular shape having a notch area, and a quadrangular shape having a circular hole in some areas. In the disclosure, for ease of description, it is assumed that the display 230 is provided in the form of a quadrangular shape and the display 230 is in a rectangular shape of which the width is longer than the height. However, various modifications are possible.

According to an embodiment, a user interface of an application (e.g., a message application, an SNS application, an Internet application) including a text input function may include various fields for supporting a text input function to a user. FIG. 3 is a diagram illustrating a comparative example that recommends, based on an input character string, a word that is expected to be subsequently input by a normal user. Referring to FIG. 3, a user interface of an application including a text input function may include at least one of the input field 310, the recommendation field 320, and the character field 330. The character field 330 may be a field that arranges and displays selectable characters (e.g., consonants in Korean, vowels in Korean, English letter, special symbols, numbers) so that a user is capable of inputting a character to the input field 310, the input field 310 may be a field that visually displays characters so that a user identifies the characters that the user selects from the character field 330 and inputs, and the recommendation field 320 may be a field that displays, based on a character (i.e., a character input by a user) displayed in the input field 310, a recommended character that is expected to be subsequently input.

According to an embodiment, the recommendation field 320 may include a plurality of recommended areas. According to an embodiment, a recommended item (e.g., a recommended word, a recommended letter, a recommended emoji, a recommended special character) that is expected to be input subsequently by a user based on a character (e.g., a character input by a user) displayed in the input field 310 may be displayed in each recommendation area. For example, the recommendation field 320 may include the first recommendation area 321, a second recommendation area 322, and a third recommendation area 323. The number of recommendation areas included in the recommendation field 320 may not be limited to FIG. 3, and two recommendation areas or four or more recommendation areas may be included in the recommendation field 320.

Referring to FIG. 3, for example, in case that a user selects (e.g., selects by touching a screen of the display 230) 'H' and 'i' among letters displayed in the character field 330, the processor 210 may detect the user input to the character field 330. The processor 210 may display 'Hi' in the input field 310 in response to the detection of the user input, and may display a recommended item expected to be input subsequently to 'Hi' by a user in each recommendation area 321, 322, and 323 of the recommendation field 320. For example, the processor 210 may display 'I'm' in the first recommendation area 321, may display 'there' in the second recommendation area 322, and may display 'I' in the third recommendation area 323. The order of recommended items displayed in the first recommendation area 321, the second recommendation area 322, and the third recommendation area 323 may be determined in order of items having the highest possibility of being input, or may be randomly determined. A user may select one of the recommended items displayed in the first recommendation area 321 to the third recommendation area 323, and may input the recommended item at once to the input field 310 without inputting each character to the character field 330 one by one.

According to an embodiment, the recommended items displayed in the recommendation areas 321, 322, and 323 may be recommended statistically based on accumulated data associated with items that an unspecified number of the general public input subsequently to Hi, may be recommended statistically based on accumulated data associated with items that a predetermined individual (e.g., a user of the electronic device 200) inputs subsequently to Hi, or may be recommended based on artificial intelligence technology based on the meaning of Hi input. In the disclosure, a description is provided from the perspective of a method that provides an individualized recommended item (e.g., a recommended emoji) based on data obtained by accumulating items (e.g., emojis) input by a predetermined individual, that is, the user of the electronic device 200.

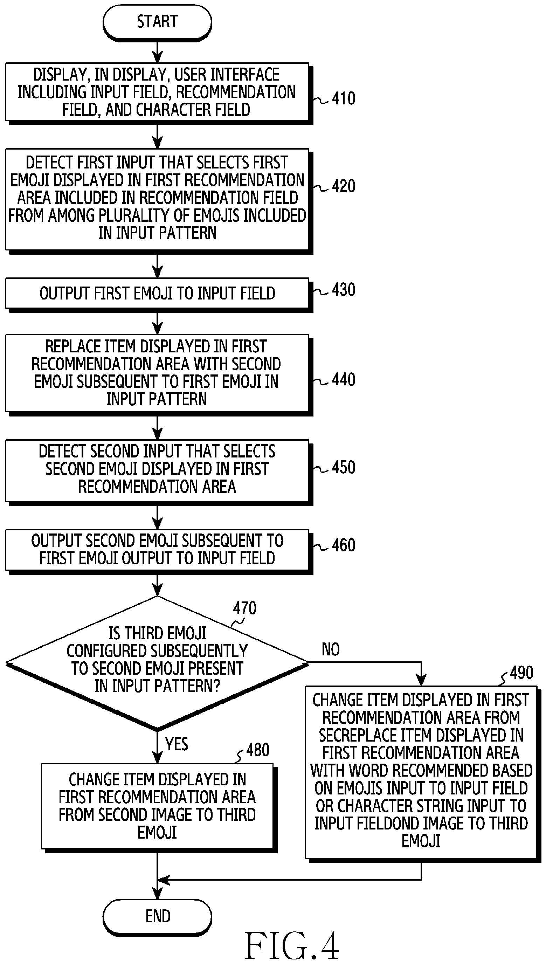

FIG. 4 is a flowchart illustrating a method of recommending an emoji by the electronic device 200 according to an embodiment.

Operations of FIG. 4 may be performed by the electronic device 200 of FIG. 2. Referring to FIG. 4, the processor 210 of the electronic device 200 according to an embodiment may perform operation 410 of displaying, in the display 230, a user interface including the input field 310, the recommendation field 320, and the character field 330, operation 420 of detecting a first input that selects a first emoji displayed in the first recommendation area 321 included in the recommendation field 320 from among a plurality of emojis included in an input pattern, operation 430 of outputting the first emoji to the input filed 310 in response to detection of the first input, operation 440 of replacing an item displayed in the first recommendation area 321 with a second emoji subsequent to the first emoji in the input pattern in response to the detection of the first input, operation 450 of detecting a second input that selects the second emoji displayed in the first recommendation area 321, operation 460 of outputting the second emoji subsequently to the first emoji output to the input field 310 in response to the detection of the second input, operation 470 of determining whether a third emoji configured subsequently to the second emoji is present in the input pattern, operation 480 of changing an item displayed in the first recommendation area 321 from the second image to the third emoji in case that the third emoji is present in the input pattern, and operation 490 of replacing the item displayed in the first recommendation area 321 with a word recommended based on the emojis input to the input field 310 or a character string input to the input field 310 in case that the third emoji is not present in the input pattern.

In the embodiment provided hereinafter, operations may be performed sequentially but may not be necessarily performed sequentially, and not all operations are necessary. The order of operations may be changed, and at least two operations may be performed in parallel. For example, operation 430 and operation 440 may be performed in a different order or in parallel, operation 460 and operation 470 may be performed in a different order or in parallel. As another example, operation 410 may be omitted, and operations 450 to operation 490 may be omitted. Hereinafter, each operation of FIG. 4 is described in detail.

According to an embodiment, in operation 410, the processor 210 may display, in the display 230, a user interface including the input field 310, the recommendation field 320, and the character field 330. For example, the processor 210 may include all of the input field 310, the recommendation field 320, and the character field 330 in a single screen and may display the same in the display 230 in order to support inputting a character. The user interface including the input field 310, the recommendation field 320, and the character field 330 may correspond to the user interface which has been described in FIG. 3. The configurations, shapes, and/or locations of the input field 310, the recommendation field 320, and the character field 330 are not limited to FIG. 3, and may be variously displayed according to the type of application and user settings. A duplicated description of the description associated with the input field 310, the recommendation field 320, and the character field 330 that have been described with reference to FIG. 3 is omitted.

According to an embodiment, in operation 420, the processor 210 may detect a first input that selects a first emoji displayed in the first recommendation area 321 included in the recommendation field 320, from among the plurality of emojis included in an input pattern. According to an embodiment, at least one input pattern including a plurality of emojis in a predetermined order may be stored in advance in the memory 220 of the electronic device 200. The processor 210 may detect the first input to the first emoji displayed in the first recommendation area 321. For example, the first emoji displayed in the first recommendation area 321 may be one of the plurality of emojis included in the at least one input pattern stored in the memory 220.

According to an embodiment, in operation 430, the processor 210 may output the first emoji to the input field 310 of the user interface in response to the detection of the first input to the first emoji. According to an embodiment, a user may touch the display 230 so as to provide input to one of the items displayed in the first recommendation area 321, the second recommendation area 322, and the third recommendation area 323 included in the recommendation field 320. In case that the user selects the first emoji displayed in the first recommendation area 321, the processor 210 may display the selected first emoji in the input field 310. Through the above, the user may identify that the first emoji is input.

According to an embodiment, in operation 440, in response to the detection of the first input to the first emoji, the processor 210 may replace an item displayed in the first recommendation area 321 with the second emoji that is subsequent to the first emoji in the input pattern. According to an embodiment, based on user input to the input field 310, the processor 210 may display, in the recommendation field 320, a recommended item that is expected to be subsequently input by a user, and the recommended item displayed in the recommendation field 320 may be changed according to an item input to the input field 310 in real time. For example, a user may touch the display 230 so as to provide input to one of the items displayed in the first recommendation area 321, the second recommendation area 322, and the third recommendation area 323 included in the recommendation field 320. In case that the user selects the first emoji displayed in the first recommendation area 321, the processor 210 may newly display, in the first recommendation area 321, a recommended item that is expected to be input by the user subsequently to the selected first emoji.

According to an embodiment, at least one input pattern including the first emoji and the second emoji may be stored in advance in the memory 220 of the electronic device 200, and the input pattern may be configured to include the second emoji subsequent to the first emoji. In this instance, the processor 210 may expect that the user is to input the second emoji subsequently to the first emoji, and may change the item displayed in the first recommendation area 321 from the first emoji to the second emoji and display the same. According to another embodiment, the processor 210 may primarily determine whether an emoji subsequent to the first emoji is present in the input pattern stored in the memory 220, and in case that the second emoji is present as an emoji subsequent to the first emoji in the input pattern, the processor 210 may perform recommendation by changing the item displayed in the first recommendation area 321 from the first emoji to the second emoji.

According to an embodiment, the processor 210 may lead user input to the second emoji recommended in the first recommendation area 321 via operation 440.In addition, the user may quickly input the second emoji by selecting the second emoji displayed in the first recommendation area 321 without performing an additional operation for searching for the second emoji.

According to an embodiment, in operation 450, the processor 210 may detect a second input that selects the second emoji displayed in the first recommendation area 321. For example, in operation 440, the user may input a touch to the second emoji displayed in the first recommendation area 321. In this instance, the processor 210 may detect user input that selects the second emoji displayed in the first recommendation area 321.

According to an embodiment, in operation 460, the processor 210 may output the second emoji subsequently to the first emoji output to the input field 310 in response to the detection of the second input. According to an embodiment, in the state in which the first emoji is input to the input field 310, the processor 210 may additionally display the second emoji subsequent to the first emoji in the input field 310 in response to user input to the second emoji in operation 450.

According to an embodiment, in operation 470, the processor 210 may determine whether a third emoji configured subsequently to the second emoji is present in the input pattern in operation 470. According to an embodiment, the processor 210 may determine whether an input pattern including an emoji sequence configured in order of the first emoji, the second emoji, and the third emoji is present among input patterns stored in the memory 220.

According to an embodiment, in case that the third emoji configured subsequently to the second emoji is determined as being present in the input pattern in operation 470, the processor 210 may change the item displayed in the first recommendation area 321 from the second image to the third emoji in operation 480. In case that the user selects the second emoji displayed in the first recommendation area 321, the processor 210 may newly display, in the first recommendation area 321, a recommended item that is expected to be input by the user subsequently to the selected second emoji. In this instance, the processor 210 determines whether the third emoji configured subsequently to the second emoji is present in the input pattern, and in case that the third emoji is present, the processor 210 may display the third emoji in the first recommendation area 321.

According to an embodiment, at least one input pattern including the second emoji and the third emoji may be stored in advance in the memory 220 of the electronic device 200, and the input pattern may be configured to include the third emoji subsequent to the second emoji. In this instance, the processor 210 may expect that the user is to input the third emoji subsequently to the second emoji, and may change the item displayed in the first recommendation area 321 from the second emoji to the third emoji and display the same.

According to an embodiment, the processor 210 may lead user input to the third emoji recommended in the first recommendation area 321 via operation 480. The user may input the third emoji by selecting the third emoji displayed in the first recommendation area 321 without performing an additional operation for searching for the third emoji. That is, the user may sequentially select the first emoji, the second emoji, and the third emoji consecutively displayed in a single identical recommendation area, that is, the first recommendation area 321, so as to input the first emoji, the second emoji, and the third emoji.

According to an embodiment, in case that the third emoji configured subsequently to the second emoji is determined as not being present in the input pattern in operation 470, the processor 210 may replace the item displayed in the first recommendation area 321 with a word recommended based on emojis input to the input field 310 or a character string input to the input field in operation 490. In case that the third emoji configured subsequently to the second emoji is not present in the input pattern stored in the memory 220 (i.e., in case that the second emoji is the last emoji in the input pattern), the processor 210 may change the item displayed in the first recommendation area 321 from the second emoji to a recommended word and display the same. That is, the processor 210 may stop recommending an emoji displayed in the first recommendation area 321, and may display, in the first recommendation area 321, a recommended word or a recommended character expected to be subsequently input by the user based on a character string input to the input field 310 up to the present or emojis (e.g., the first emoji, the second emoji) input to the input field 310 up to the present. As another example, the processor 210 may display, in the first recommendation area 321, a recommended word or a recommended character expected to be input subsequently by a user based on a word that is last input to the input field 310 or attribute information of an input pattern input to the input field 310.

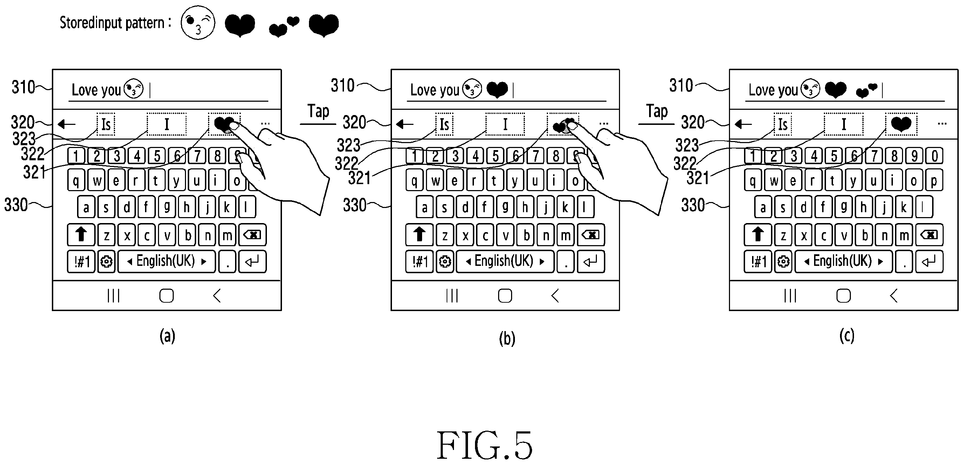

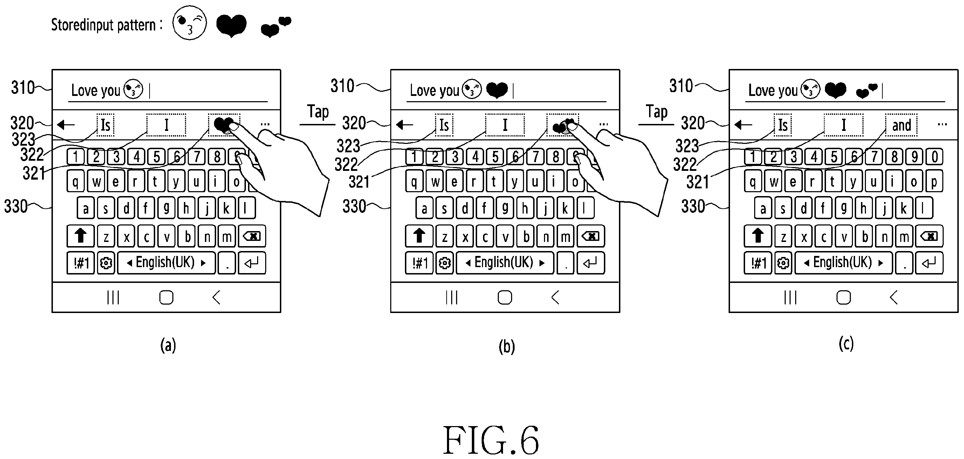

Hereinafter, with reference to FIG. 5 and FIG. 6, operations of FIG. 4 performed in the electronic device 200 are described.

FIG. 5 and FIG. 6 are diagrams illustrating a method of recommending an emoji according to an input pattern stored in the electronic device 200 according to an embodiment. FIG. 5 shows diagrams illustrating the case in which the third emoji configured subsequently to the second emoji is present in the input pattern in operation 470. FIG. 6 shows diagrams illustrating the case in which the third emoji configured subsequently to the second emoji is not present in the input pattern in operation 470.

According to an embodiment, in the memory 220 of the electronic device 200 of FIG. 5, a plurality of emojis in order of a first emoji, a second emoji, a third emoji, and a fourth emoji (e.g., 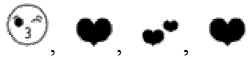 ) may be stored as a single input pattern. The first emoji to the fourth emoji may be different from each other, or at least one of the first emoji to the fourth emoji may be the same.

Referring to (a) of FIG. 5, the processor 210 may display the second emoji in the first recommendation area 321 of the recommendation field 320. For example, the second emoji displayed in the first recommendation area 321 may be a recommended item that is expected, based on an item (e.g., the first emoji) input to the input field 310, to be subsequently input by a user. According to an embodiment, while displaying the second emoji in the first recommendation area 321, the processor 120 may display other recommended items (e.g., is, I) expected to be input subsequently by the user in the second recommendation area 322 and/or the third recommendation area 323. The recommended items displayed in the second recommendation area 322 and/or the third recommendation area 323 may be words recommended based on at least part of emojis or character strings input to the input field 310, or may be other emojis that are different from the second emoji and are recommended based on at least part of emojis or character strings input to the input field 310.

According to an embodiment, in (a) of FIG. 5, a user may input a touch to the second emoji displayed in the first recommendation area 321 of the display 230, and the processor 210 may detect user input to the second emoji.

Referring to (b) of FIG. 5, in case that input to the second emoji in the first recommendation area 321 is detected in (a) of FIG. 5, the processor 210 may additionally display the second emoji subsequent to the first emoji that is input in advance to the input field 310. In addition, in response to the detection of input to the second emoji in the first recommendation area 321, the processor 210 may replace the item in the first recommendation area 321 with the third emoji that is subsequent to the second emoji in the input pattern and display the same. The processor 210 may determine that the third emoji configured subsequently to the second emoji is present in the input pattern, and may change the item in the first recommendation area 321 from the second emoji to the third emoji and may display the same. According to an embodiment, an operation of determining whether an emoji configured subsequently to the second emoji is present in the input pattern may be omitted. In (b) of FIG. 5, a user may input a touch to the third emoji newly displayed in the first recommendation area 321 of the display 230, and the processor 210 may detect the user input to the third emoji. In (b) of FIG. 5, an operation of displaying the second emoji in the input field 310 and an operation of displaying the third emoji in the first recommendation area 321 may be performed in a different order or in parallel.

Referring to (c) of FIG. 5, in case that input to the third emoji in the first recommendation area 321 is detected in (b) of FIG. 5, the processor 210 may additionally display the third emoji subsequent to the second emoji that is input in advance to the input field 310. In addition, in response to the detection of input to the third emoji in the first recommendation area 321, the processor 210 may replace the item in the first recommendation area 321 with the fourth emoji that is subsequent to the third emoji in the input pattern and display the same. The processor 210 may determine whether an emoji configured subsequently to the third emoji is present in the input pattern, and in case that the fourth emoji is determined as being configured subsequently to the third emoji in the input pattern, the processor 210 may change the item in the first recommendation area 321 from the third emoji to the fourth emoji. In (c) of FIG. 5, an operation of displaying the third emoji in the input field 310 and an operation of displaying the fourth emoji in the first recommendation area 321 may be performed in a different order or in parallel.

The location of the first recommendation area 321, which recommends emojis according to an input patten, in the recommendation field 320 may not be limited to the drawing in FIG. 5, and may be located in the left or the center of the recommendation field 320.

Via operations of FIGS. 5A, 5B, and 5C, recommended items displayed in the second recommendation area 322 and/or the third recommendation area 323 may be maintained, or may be changed based on a character string or emoji input to the input field 310.

According to an embodiment, in the memory 220 of the electronic device 200 of FIG. 6, a plurality of emojis in order of a first emoji, a second emoji, and a third emoji, (e.g., 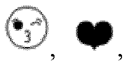 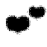 ) may be stored as a single input pattern. Referring to FIGS. 5 and 6, only input patterns stored in the memory 220 may be different, and operations performed in (a) of FIG. 6 may correspond to the operations performed in (a) of FIG. 5 and operations performed in (b) of FIG. 6 may correspond to the operations performed in (b) of FIG. 5. Hereinafter, a description is provided with reference to (c) of FIG. 6.

Referring to (c) of FIG. 6, in case that input to the third emoji in the first recommendation area 321 is detected in (b) of FIG. 6, the processor 210 may additionally display the third emoji subsequently to the second emoji that is input in advance to the input field 310. In addition, in response to the detection of input to the third emoji in the first recommendation area 321, the processor 210 may determine whether an emoji configured subsequently to the third emoji is present in the input pattern. According to an embodiment, in case that an emoji configured subsequently to the third emoji is determined as not being present in the input pattern, that is, in case that the third emoji is the last emoji in the input pattern, the processor 210 may replace the item in the first recommendation area 321 with a recommended word (e.g., and) based on a character string (e.g., Love you) input to the input field 310 or emojis (e.g., the first emoji, the second emoji, and the third emoji) input to the input field 310. For example, based on the character string "Love you" input to the input field 310 up to the present, the processor 210 may determine a recommended word that is expected to be input subsequently by a user to be "and". In this instance, the processor 210 may change the recommended item displayed in the first recommendation area 321 from the third emoji to "and" and may display the same. In (c) of FIG. 6, an operation of displaying the third emoji in the input field 310 and an operation of displaying "and" in the first recommendation area 321 may be performed in a different order or in parallel.

According to another embodiment, in case that an emoji configured subsequently to the third emoji is determined as not being present in the input pattern, that is, in case that the third emoji is determined as the last emoji in the input pattern, the processor 210 may recommend again emojis included in the input pattern in the first recommendation area 321. For example, in case that the third emoji is determined as the last emoji in the input pattern, the processor 210 may change the recommended item displayed in the first recommendation area 321 from the third emoji to the first emoji that is the first one in the input pattern.

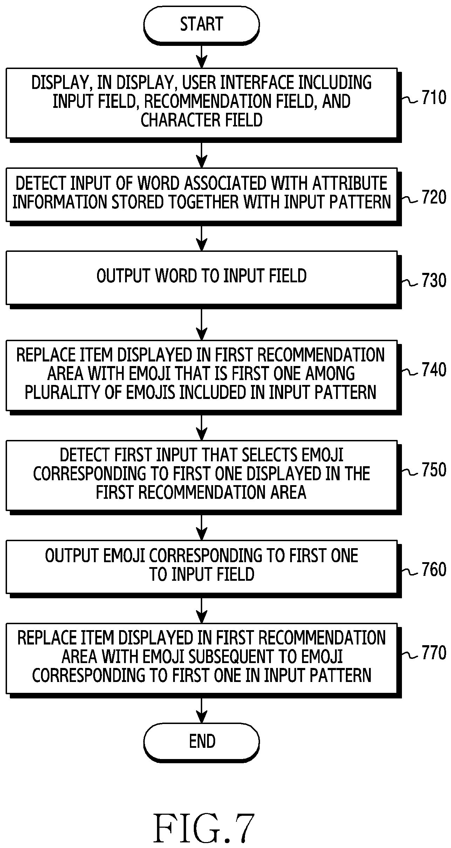

FIG. 7 is a flowchart illustrating a method of recommending an emoji based on attribute information stored together with an input pattern, by the electronic device 200 according to an embodiment.

According to an embodiment, an input pattern including a plurality of emojis may be stored in the memory 220 of the electronic device 200, together with attribute information obtained by analyzing the plurality of emojis. In this instance, the processor 210 may recommend, via the recommendation field 320, emojis included in the input pattern according to input of a word associated with attribute information.

Operations of FIG. 7 may be performed by the electronic device 200 of FIG. 2. Referring to FIG. 7, the processor 210 of the electronic device 200 according to an embodiment may perform operation 710 of displaying, in the display 230, a user interface including the input field 310, the recommendation field 320, and the character field 330, operation 720 of detecting input of a word associated with attribute information stored together with an input pattern, operation 730 of outputting the word to the input field 310 in response to the detection of input of the word associated with the attribute information, operation 740 of replacing an item displayed in the first recommendation area 321 with an emoji that is the first one among a plurality of emojis included in the input pattern in response to the detection of the input of the word associated with the attribute information, operation 750 of detecting a first input that selects the emoji that is the first one displayed in the first recommended area, operation 760 of outputting, to the input field 310, the emoji that is the first one in response to the detection of the first input, and operation 770 of replacing the item displayed in the first recommendation area 321 with an emoji subsequent to the emoji that is the first one in the input pattern in response to the detection of the first input.

In the embodiment provided hereinafter, operations may be performed sequentially but may not be necessarily performed sequentially, and not all operations are necessary. The order of operations may be changed, and at least two operations may be performed in parallel. For example, operation 730 and operation 740 may be performed in a different order or in parallel, operation 760 and operation 770 may be performed in a different order or in parallel. According to another embodiment, at least one operation among operation 710 to operation 730 may be omitted. Hereinafter, each operation of FIG. 7 is described in detail.

According to an embodiment, in operation 710, the processor 210 may display, in the display 230, a user interface including the input field 310, the recommendation field 320, and the character field 330. Operation 710 of FIG. 7 may correspond to operation 410 of FIG. 4, and a duplicated description is omitted.

According to an embodiment, in operation 720, the processor 210 may detect input of a word associated with attribute information stored together with an input pattern. According to an embodiment, an input pattern including a plurality of emojis in a predetermined order and attribute information obtained by analyzing the plurality of emojis may be stored as a single set in the memory 220 of the electronic device 200. According to an embodiment, in case that a user inputs at least one word by using the character field 330, the processor 210 may determine whether the at least one input word is a word that is same as or associated with the attribute information stored together with the input pattern.

According to an embodiment, in response to the detection of input of the word associated with the attribute information, the processor 210 may output the word associated with the attribute information to the input field 310 in operation 730. The word associated with the attribute information may include, for example, a word that is same as the attribute information and a word having a meaning that is same as or similar to the attribute information.

According to an embodiment, in response to detection of input of the word associated with the attribute information, the processor 210 may replace an item displayed in the first recommendation area 321 with an emoji corresponding to the first one among a plurality of emojis included in an input pattern in operation 740. According to an embodiment, in the state in which an input pattern including emojis in order of a 'first emoji, second emoji, and third emoji' and attribute information of 'a' are stored together in the memory 220, in case that the processor 210 detects that a word associated with 'a' is input, the processor 210 may display, in the first recommendation area 321, the 'first emoji' that is an emoji corresponding to the first one among the emojis included in the stored input pattern.

According to an embodiment, the processor 210 may detect a first input that selects an emoji that is the first one displayed in the first recommendation area 321 in operation 750, may output, to the input field 310, the emoji that is the first one in operation 760 in response to the detection of the first input, and may replace the item displayed in the first recommendation area 321 with an emoji subsequent to the emoji corresponding to the first one in the input pattern in operation 770. Since operations performed after the detection of input for selecting an emoji displayed in the first recommendation area 321 are the same as or similar to those of FIG. 4, operation 750 of FIG. 7 may correspond to operation 420 of FIG. 4, operation 760 of FIG. 7 may correspond to operation 430 of FIG. 4, and operation 770 of FIG. 7 may correspond to operation 440 of FIG. 4. A duplicated description is omitted.

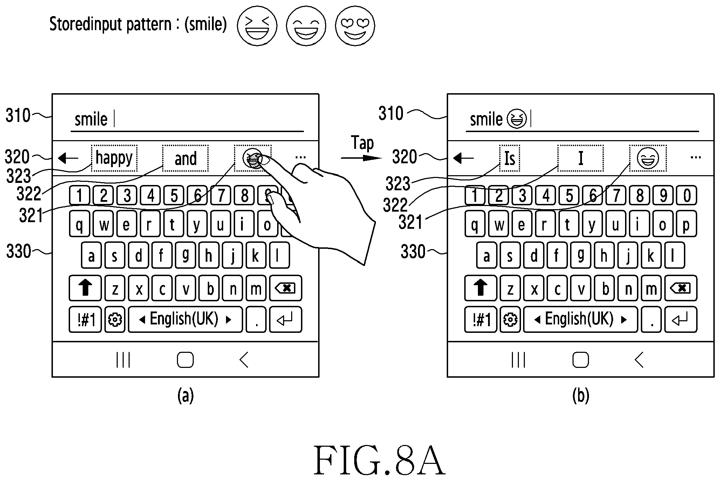

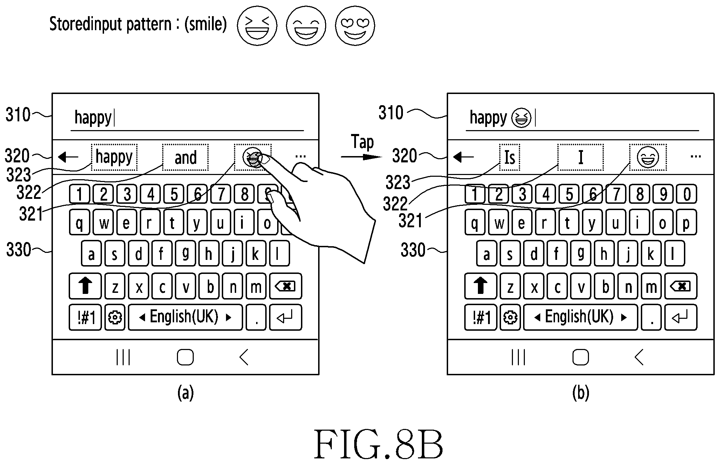

Hereinafter, referring to FIG. 8A and FIG. 8B, operations of FIG. 7 performed in the electronic device 200 are described.

FIGS. 8A and 8B are diagrams illustrating a method of recommending, based on attribute information stored together with an input pattern, an emoji in response to detection of input of a word associated with the attribute information, by the electronic device 200 according to an embodiment. FIG. 8A is a diagram illustrating the case in which input of a word that is same as attribute information is detected in operation 720, and FIG. 8B is a diagram illustrating the case in which input of a word similar to the attribute information is detected in operation 720.

According to an embodiment, together with 'smile' that is attribute information obtained by analyzing a first emoji, a second emoji, and a third emoji (e.g., 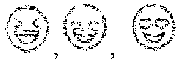 ), the plurality of emojis may be sequentially stored a single input pattern in the memory 220 of the electronic device 200 of FIGS. 8A and 8B.

Referring to (a) of FIG. 8A, the processor 210 may detect user input to each of the characters, s, m, i, 1, and e, or may detect user input to a word, smile. In this instance, the processor 210 may display 'smile' in the input field 310. In case that user input to each of the characters, s, m, i, 1, and e or user input to the word, 'smile', is detected, the processor 210 may determine whether an input pattern having attribute information same as the input 'smile' is present in the memory 220. For example, the processor 210 may recognize that an input pattern of the first emoji, the second emoji, and the third emoji that is stored together with the attribute information of smile is stored in advance in the memory 220, and may display, in the first recommendation area 321, the first emoji of the input pattern.

According to an embodiment, in (a) of FIG. 8A, a user may touch the first emoji displayed in the first recommendation area 321 of the display 230, and the processor 210 may detect user input to the first emoji.

Referring to (b) of FIG. 8A, in case that input to the first emoji in the first recommendation area 321 is detected in (a) of FIG. 8A, the processor 210 may additionally display the first emoji subsequently to 'smile' that is input in advance to the input field 310. In addition, in response to the detection of input to the first emoji in the first recommendation area 321, the processor 210 may replace the item in the first recommendation area 321 with the second emoji that is subsequent to the first emoji in the input pattern and display the same. The processor 210 may determine that the second emoji configured subsequently to the first emoji is present in the input pattern, and may change the item in the first recommendation area 321 from the first emoji to the second emoji and display the same. According to an embodiment, an operation of determining whether an emoji configured subsequently to the first emoji is present in the input pattern may be omitted.

In (b) of FIG. 8A, an operation of displaying the first emoji in the input field 310 and an operation of displaying the second emoji in the first recommendation area 321 may be performed in a different order or in parallel. According to an embodiment, in (b) of FIG. 8A, a user may additionally touch the second emoji newly displayed in the first recommendation area 321 of the display 230, and operations to be performed thereafter may correspond the operations which have been described with reference to FIGS. 4 to 6.

Referring to (a) of FIG. 8B, the processor 210 may detect user input to each of the characters, h, a, p, p, and y, or may detect user input to a word, happy. In this instance, the processor 210 may display 'happy' in the input field 310. In case that user input to each of the characters, h, a, p, p, and y or user input to the word, 'happy', is detected, the processor 210 may determine whether an input pattern having attribute information (e.g., smile, heart) similar to the input 'happy' is present in the memory 220. For example, the processor 210 may recognize that an input pattern of the first emoji, the second emoji, and the third emoji is stored in advance, together with the attribute information of smile, which is a word similar to the input 'happy', in the memory 220, and may display, in the first recommendation area 321, the first emoji of the input pattern.

According to an embodiment, in (a) of FIG. 8B, a user may touch the first emoji displayed in the first recommendation area 321 of the display 230, and the processor 210 may detect user input to the first emoji.

Referring to (b) of FIG. 8B, in case that input to the first emoji in the first recommendation area 321 is detected in (a) of FIG. 8B, the processor 210 may additionally display the first emoji subsequently to 'happy' that is input in advance to the input field 310. In addition, in response to the detection of input to the first emoji in the first recommendation area 321, the processor 210 may replace the item in the first recommendation area 321 with the second emoji that is subsequent to the first emoji in the input pattern and display the same. The processor 210 may determine that the second emoji configured subsequently to the first emoji is present in the input pattern, and may change the item in the first recommendation area 321 from the first emoji to the second emoji and display the same.

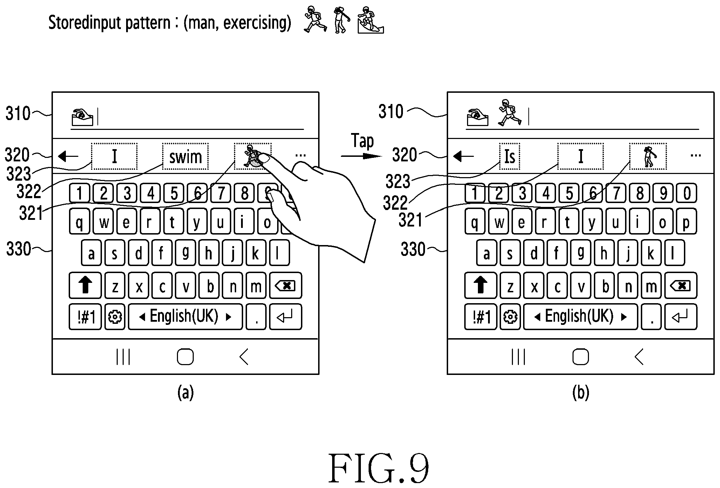

FIG. 9 shows diagrams illustrating a method of recommending, based on attribute information stored together with an input pattern, an emoji in response to detection of input of a different emoji having attribute information same as or similar to the attribute information, by the electronic device 200 according to an embodiment.

According to an embodiment, together with 'man' and 'exercising' that are a plurality of pieces of attribute information obtained by analyzing a first emoji, a second emoji, and a third emoji (e.g., 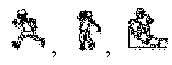 ), the plurality of emojis may be stored as a single input pattern in the memory 220 of the electronic device 200 of FIG. 9.

Referring to (a) of FIG. 9, the processor 210 may detect user input to a fourth emoji (e.g., 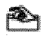 ) that is different from the first emoji, the second emoji, and the third emoji, and in this instance, may display the fourth emoji in the input field 310. In addition, in case that the user input to the fourth emoji is detected, the processor 210 may analyze attribute information of the fourth emoji, and may determine whether an input pattern having attribute information that is same as or similar to the analyzed attribute information is stored in the memory 220. For example, the processor 210 may extract at least one of 'man', 'exercising', and 'swimming' as the attribute information of the fourth emoji, and may recognize that an input pattern of the first emoji, the second emoji, and the third emoji having attribute information (e.g., man, exercising) that is same as or similar to the extracted attribute information of the fourth emoji is stored in advance in the memory 220. In this instance, the processor 210 may display, in the first recommendation area 321, the first emoji that is the first one in the input pattern.

According to an embodiment, in (a) of FIG. 9, a user may touch the first emoji displayed in the first recommendation area 321 of the display 230, and the processor 210 may detect user input to the first emoji.

Referring to (b) of FIG. 9, in case that input to the first emoji in the first recommendation area 321 is detected in (a) of FIG. 9, the processor 210 may additionally display the first emoji subsequent to the fourth emoji that is input in advance to the input field 310. In addition, in response to the detection of input to the first emoji in the first recommendation area 321, the processor 210 may replace the item in the first recommendation area 321 with the second emoji that is subsequent to the first emoji in the input pattern and display the same. The processor 210 may determine that the second emoji configured subsequently to the first emoji is present in the input pattern, and may change the item in the first recommendation area 321 from the first emoji to the second emoji and display the same. According to an embodiment, an operation of determining whether an emoji configured subsequently to the first emoji is present in the input pattern may be omitted.

In (b) of FIG. 9, an operation of displaying the first emoji in the input field 310 and an operation of displaying the second emoji in the first recommendation area 321 may be performed in a different order or in parallel. According to an embodiment, in (b) of FIG. 9, a user may additionally touch the second emoji newly displayed in the first recommendation area 321 of the display 230, and operations to be performed thereafter may correspond the operations which have been described with reference to FIGS. 4 to 6.

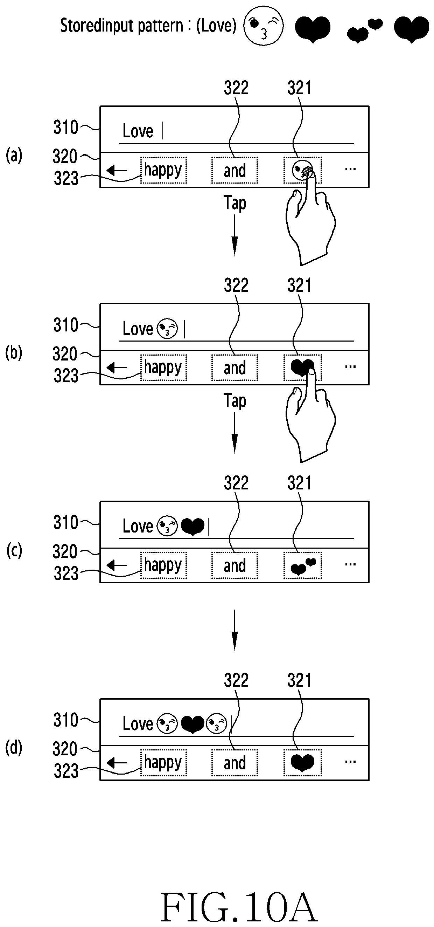

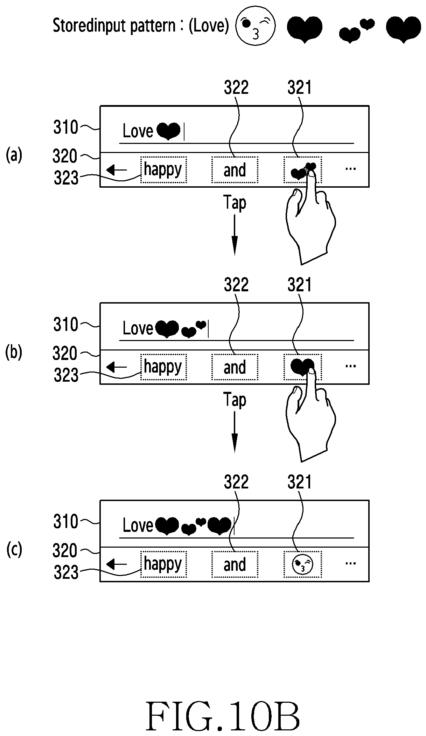

FIGS. 10A and 10B are diagrams illustrating a method of recommending an emoji based on user input and an input pattern stored in the electronic device 200 according to an embodiment.

Referring to FIG. 10A and FIG. 10B, although emojis are not sequentially input in order of emojis in the input pattern stored in the memory 220 of the electronic device 200, the processor 210 may recommend, based on an input pattern, an emoji in the first recommendation area 321.

According to an embodiment, together with 'love' that is attribute information obtained by analyzing a first emoji, a second emoji, a third emoji, and a fourth emoji (e.g., 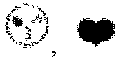 , 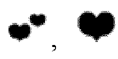 ), the plurality of emojis are sequentially stored as a single input pattern in the memory 220 of the electronic device 200 of FIG. 10A.

Operations performed in (a) and (b) of FIG. 10A may correspond to the operations that have been described with reference to (a) and (b) of FIG. 8A, and thus a description is provided with reference to (c) and (d) of FIG. 10A.

Referring to (c) of FIG. 10A, the processor 210 may receive input of 'love', the first emoji, and the second emoji from a user, and may display the 'love, the first emoji, and the second emoji' in the input field 310. According to an embodiment, the processor 210 may determine whether an emoji subsequent to the second emoji that is input last up to the present is present in the input pattern. The processor 210 may detect that a third emoji is configured subsequently to the second emoji in the input pattern, and may display the third emoji in the first recommendation area 321.

According to an embodiment, the user may input a different character or emoji other than recommended items displayed in the first recommendation area 321 to the third recommendation area 323 by using the character field 330 or the like. That is, in (c) of FIG. 10A, the user may input the first emoji, irrespective of the recommended items (e.g., 'happy', 'and', the third emoji) displayed in the first recommendation area 321 to the third recommendation area 323.

Referring to (d) of FIG. 10A, the processor 210 may additionally display the first emoji subsequently to the 'love, the first emoji, and the second emoji' input in advance to the input field 310, in response to detection of user input to the first emoji. In addition, in response to detection of user input to the first emoji, the processor 210 may replace an item displayed in the first recommendation area 321 with the second emoji configured subsequently to the first emoji in the input pattern.

According to an embodiment, together with 'love' that is attribute information obtained by analyzing a first emoji, a second emoji, a third emoji, and a fourth emoji, the plurality of emojis are sequentially stored as a single input pattern in the memory 220 of the electronic device 200 of FIG. 10B.

Referring to (a) of FIG. 10B, the processor 210 may receive input of 'love' and the second emoji from a user, and may display the 'love, the second emoji' in the input field 310. According to an embodiment, although an input pattern that begins with the second emoji is not present among input patterns stored in the memory 220, that is, the second emoji is an emoji arranged in the middle of the sequence in the stored input pattern, the processor 210 may determine and recommend an emoji configured subsequently to the second emoji. According to an embodiment, the processor 210 may determine whether an emoji that is subsequent to the second emoji input last up to the present is present in the input field 310, and may detect that a third emoji is configured subsequently to the second emoji in the input pattern. In this instance, the processor 210 may display the third emoji in the first recommendation area 321.

According to an embodiment, in (a) of FIG. 10B, a user may select the third emoji displayed in the first recommendation area 321 of the display 230, and operations to be performed thereafter may correspond the operations which have been described with reference to FIGS. 4 to 6. That is, the processor 210 may sequentially display, in the first recommendation area 321, emojis subsequent to the third emoji in the input pattern, and after displaying the last emoji (e.g., the fourth emoji) of the input pattern, may re-recommend the emojis from the first one (e.g., the first emoji) in the input pattern.

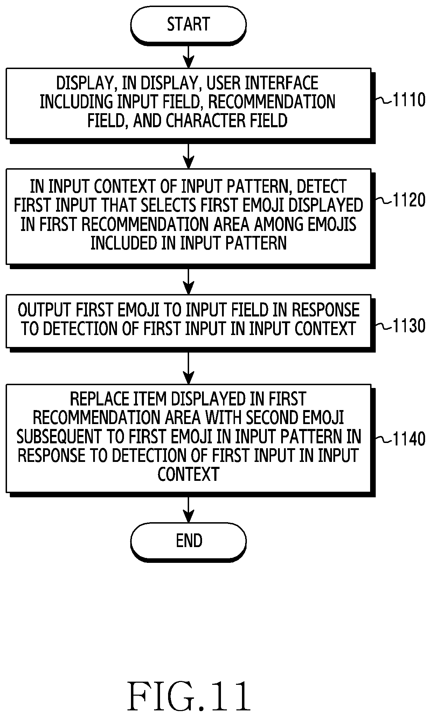

FIG. 11 is a flowchart illustrating a method of recommending an emoji based on an input context and an input pattern stored in the electronic device 200 according to an embodiment.

According to an embodiment, an input pattern including a plurality of emojis may be stored in the memory 220 of the electronic device 200, together with information associated with an input context in which the plurality of emojis are input. In this instance, the processor 210 may recommend, in the recommendation field 320, emojis included in the input pattern according to the input context.

Operations of FIG. 11 may be performed by the electronic device 200 of FIG. 2. Referring to FIG. 11, the processor 210 of the electronic device 200 according to an embodiment may perform operation 1110 of displaying, in the display 230, a user interface including the input field 310, the recommendation field 320, and the character field 330, operation 1120 of detecting a first input that selects a first emoji displayed in the first recommendation area 321, from among a plurality of emojis included in an input pattern in an input context of the input pattern, operation 1130 of outputting the first emoji to the input field 310 in response to the detection of the first input in the input context, and operation 1140 of replacing an item displayed in the first recommendation area 321 with a second emoji subsequent to the first emoji in the input pattern, in response to the detection of the first input in the input context.

In the embodiment provided hereinafter, operations may be performed sequentially but may not be necessarily performed sequentially, and not all operations are necessary. The order of operations may be changed, and at least two operations may be performed in parallel. For example, operation 1130 and operation 1140 may be performed in a different order or in parallel. As another example, operation 1110 may be omitted. Hereinafter, each operation of FIG. 11 is described in detail.

According to an embodiment, in operation 1110, the processor 210 may display, in the display 230, a user interface including the input field 310, the recommendation field 320, and the character field 330. Operation 1110 of FIG. 11 may correspond to operation 410 of FIG. 4, and a duplicated description is omitted.

According to an embodiment, in operation 1120, in the input context of the input pattern, the processor 210 may detect the first input that selects the first emoji displayed in the first recommendation area 321 from among the plurality of emojis included in the input pattern. The input context may be information associated with an execution environment of the electronic device 200 for recommending emojis included in the input pattern. For example, information associated with the input context may include at least one of application type information, user account information, and conversation partner information. That is, the input pattern stored in the memory 220 of the electronic device 200 may be stored together with information associated with an input context, for example, information associated with which application is executed in the electronic device 200, information associated with which user account is logged in, and/or information associated with who is the partner of the conversation. The stored input pattern may differ depending on which application is executed, which user account is logged in, and/or who is the partner of the conversation, and the processor may recommend an input pattern that differs depending on the above-described conditions.

According to an embodiment, in the input context (or input context environment) stored together with the input pattern, the processor 210 may detect the first input that selects the first emoji in the input pattern displayed in the first recommendation area 321. For example, in the input context in which application A is being executed and user B and user C are having a conversation, the processor 210 may detect the first input that selects the first emoji displayed in the first recommendation area 321 from among emojis included in the input pattern stored in advance.

According to an embodiment, in operation 1130, the processor 210 may output the first emoji to the input field 310 of the user interface in response to the detection of the first input to the first emoji in the input context. For example, in the input context in which application A is being executed, and user B and user C are having a conversation, the processor 210 may output the first emoji to the input field 310 in response to detection of the first input to the first emoji.

According to an embodiment, in operation 1140, in response to the detection of the first input to the first emoji in the input context, the processor 210 may replace an item displayed in the first recommendation area 321 with the second emoji that is subsequent to the first emoji in the input pattern. For example, the processor 210 may replace the item displayed in the first recommendation area 321 with the second emoji that is subsequent to the first emoji and display the same in response to the detection of the first input to the first emoji in the input context in which application A is being executed, and user B and user C are having a conversation. In this instance, the input pattern stored in the memory 220 of the electronic device 200 may be stored together with 'information associated with the input context in which application A is being executed and user B and user C are having a conversation.

According to an embodiment, in response to the detection of the first input to the first emoji in the input context, the processor 210 may determine whether an input pattern including the first emoji is stored together with information associated with the input context in the memory 220. In case that the input pattern including the first emoji is determined as being stored together with the information associated with the input text in the memory 220, the processor 210 may replace the item displayed in the first recommendation area with the second emoji subsequent to the first emoji in the input pattern.

According to an embodiment, input patterns may be stored differently depending on the type of application being executed in the electronic device 200, the subject of conversation (i.e., a user logging in the application), and/or conversation partner. The processor 210 may display, in the first recommendation area 321, emojis of input patterns configured to be different depending on the type of application being executed in the application 200, the subject of the conversation (i.e., a user account logging in an application), and/or a conversation partner.

Although not illustrated in FIG. 11, in operation 1140, operations subsequent to the operation of displaying the second emoji in the first recommendation area 321 may be performed in the same or similar manner to the operations of FIG. 4.

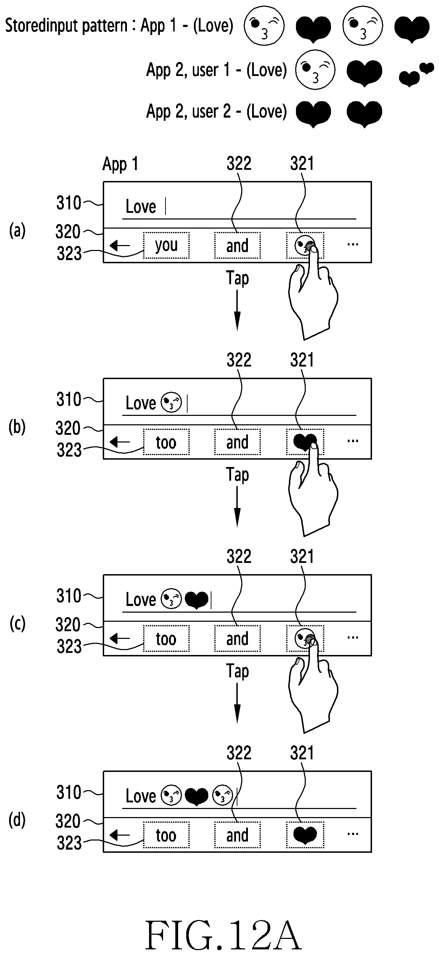

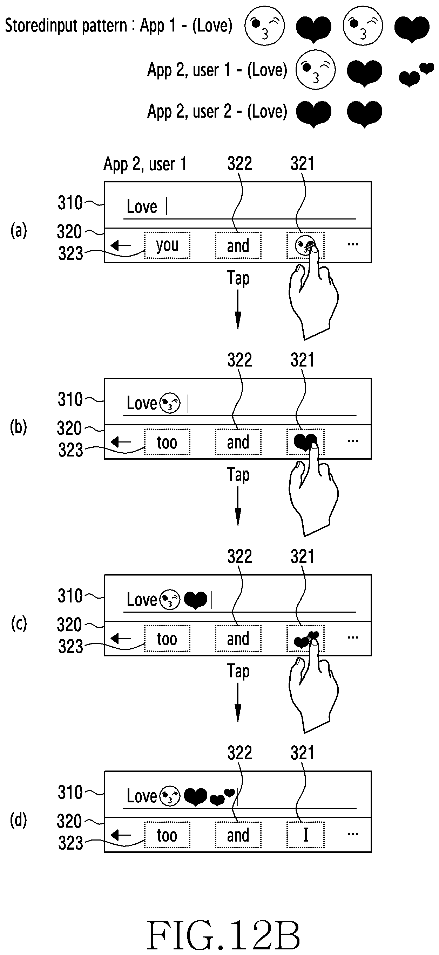

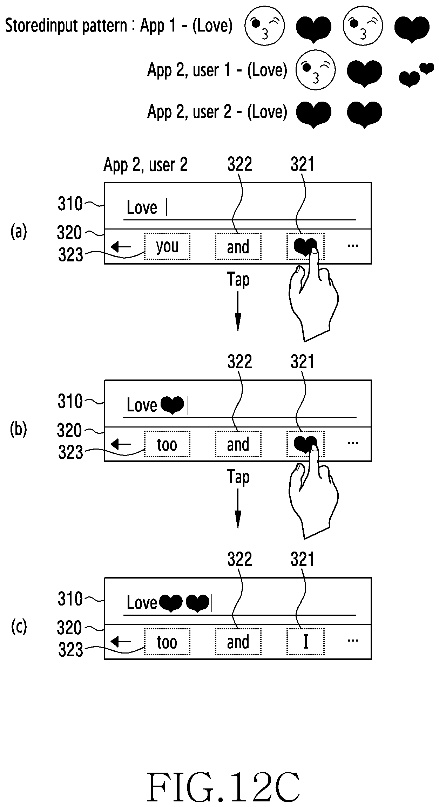

Hereinafter, referring to FIGS. 12A, FIG. 12B, and FIG. 12C, operations of FIG. 11 performed in the electronic device 200 are described.

FIGS. 12A to 12C are diagrams illustrating a method of recommending an emoji based on an input context and an input pattern stored in the electronic device 200 according to an embodiment.

According to an embodiment, together with information associated with an input context that is a condition in which a plurality of emojis are input (or a condition for recommending a plurality of emojis) and attribute information obtained by analyzing the plurality of emojis, the plurality of emojis may be stored as a single input pattern in the memory 220 of the electronic device 200 of FIGS. 12A to 12C.

For example, an input pattern of a first emoji, a second emoji, a third emoji, and a fourth emoji (e.g., 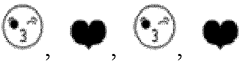 ) may be stored in the memory 220 of the electronic device 200 for recommendation in case that a first application is being executed in the electronic device 200, an input pattern of a fifth emoji, a sixth emoji, and a seventh emoji (e.g., 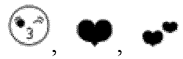 ) may be stored for recommendation in case that a second application is executed by a first user in the electronic device 200, and an input pattern of an eight emoji and a nineth emoji (e.g., 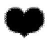 , 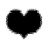 ) may be stored for recommendation in case that the second application is executed by a second user in the electronic device 200. In this instance, each input pattern may be stored together with attribute information (e.g., love) obtained by analyzing the emojis included in the corresponding input pattern. The first emoji to the ninth emoji may be different from each other, or at least one of the first emoji to the ninth emoji may be the same.

FIG. 12A is a diagram illustrating operations of sequentially recommending or displaying, by the processor 210, a first emoji, a second emoji, a third emoji, and a fourth emoji in the first recommendation area 321 in response to 'love' input to the input field 310 (or user input of'love') in case that the first application is being executed in the electronic device 200 in the state in which the above-described input patterns are stored in the memory 220 of the electronic device 200. FIG. 12B is a diagram illustrating operations of sequentially recommending or displaying, by the processor 210, a fifth emoji, a sixth emoji, and a seventh emoji in the first recommendation area 321 in response to 'love' input to the input field 310 in case that the second application is being executed by the first user (or a first user account is logged in) in the electronic device 200 in the state in which the above-described input patterns are stored in the memory 220 of the electronic device 200. FIG. 12C is a diagram illustrating operations of sequentially recommending or displaying, by the processor 210, an eighth emoji and a ninth emoji in the first recommendation area 321 in response to 'love' input to the input field 310 in case that the second application is being executed by the second user (or in case that a second user account is logged in) in the electronic device 200 in the state in which the above-described input patterns are stored in the memory 220 of the electronic device 200.

According to an embodiment, the processor 210 may recommend an input pattern (e.g., emojis included in the input pattern) based on the type of an application being executed in the electronic device 200, information associated with a user who logs in, and/or information associated with a conversation partner, among stored input patterns that differ depending on the type of an application being executed in the electronic device 200, information associated with a user that logs in, and/or information associated with a conversation partner.

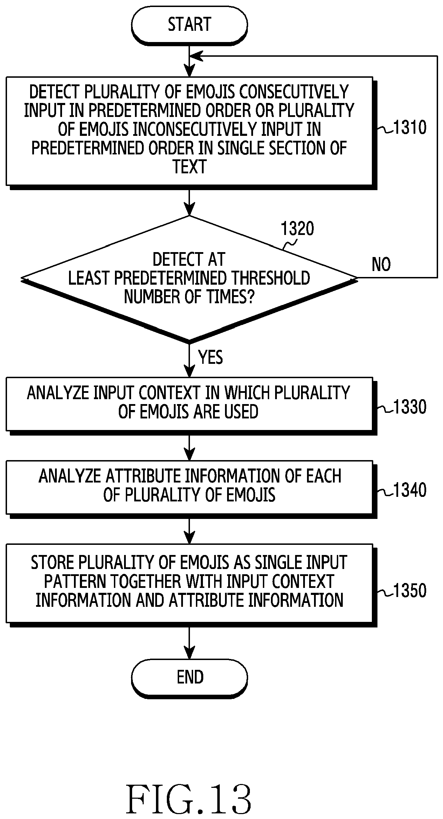

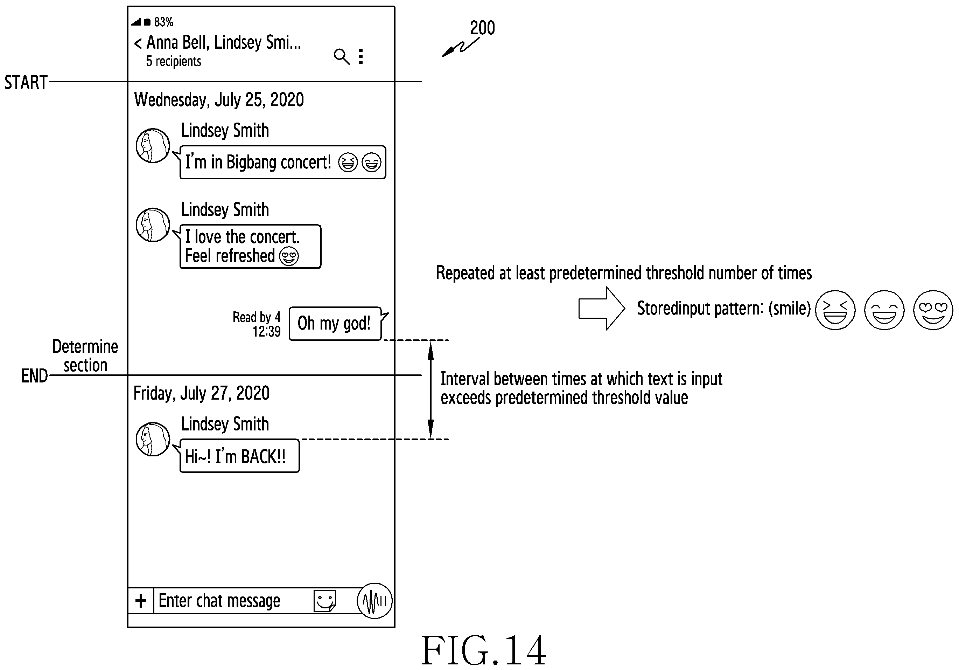

According to an embodiment, the input pattern may be automatically stored in the memory 200 by accumulating and analyzing emojis that a user frequently uses in the electronic device 200, or emojis configured in a predetermined order by user settings may be stored as a single input pattern in the memory 220. For example, in case that emojis that are input in a predetermined order repeatedly in the electronic device 200 are detected, the processor 210 may store the emojis as a single input pattern in the memory 220. As another example, the processor 210 may store, in the memory 220, emojis configured in a predetermined order by user settings may be stored as a single input pattern in the memory 220. In this instance, each input pattern may be stored together with information associated with an input context in which emojis included in the input pattern are used and/or analyzed attribute information of the emojis included in the input pattern. Hereinafter, with reference to FIG. 13 and FIG. 14, a method of accumulating and analyzing emojis that a user frequently uses in the electronic device 200, and storing the same as an input pattern is described.

FIG. 13 is a flowchart illustrating a method of storing a plurality of emojis as a single input pattern, together with input context information and attribute information, by the electronic device 200 according to an embodiment.

Operations of FIG. 13 may be performed by the electronic device 200 of FIG. 2. Referring to FIG. 13, the processor 210 of the electronic device 200 according to an embodiment may perform operation 1310 of detecting a plurality of emojis consecutively input in a predetermined order or a plurality of emojis inconsecutively input in a single section of text in a predetermined order, operation 1320 of determining whether the plurality of emojis is detected repeatedly at least a predetermined threshold number of times, operation 1330 of analyzing an input context in which the plurality of emojis are used in case that the plurality of emojis is detected repeatedly at least a predetermined threshold number of times, operation 1340 of analyzing attribute information of each of the plurality of emojis in case that the plurality of emojis are detected at least a predetermined threshold number of times, and operation 1350 of storing the plurality of emojis as a single input pattern together with the input context information and the attribute information.

In the embodiment provided hereinafter, operations may be performed sequentially but may not be necessarily performed sequentially, and not all operations are necessary. The order of operations may be changed, and at least two operations may be performed in parallel. For example, operation 1330 and operation 1340 may be performed in a different order or in parallel. Hereinafter, each operation of FIG. 13 is described in detail.

According to an embodiment, in operation 1310, the processor 210 may detect a plurality of emojis consecutively input in a predetermined order or a plurality of emojis inconsecutively input in a single section of text in a predetermined order. For example, the processor 210 may detect that a plurality of emojis in a predetermined order are consecutively input in a single sentence or in a single message in the electronic device 200. Alternatively, although the plurality of emojis are not consecutively input, the processor may detect that a plurality of emojis are input in a predetermined order in a single section of text. According to an embodiment, the state in which the plurality of emojis are inconsecutively input may be the state in which a few non-emojis (e.g., text) are input between input emojis, or the state in which a plurality of emojis are separately input to a few messages or a few sentences.

According to an embodiment, in operation 1320, the processor 210 may determine whether the plurality of emojis in the predetermined order is repeatedly detected at least a predetermined threshold number of times. According to an embodiment, the processor 210 may detect emojis input to the electronic device 200, may accumulate and analyze data associated with the input emojis, and may determine whether a plurality of emojis in a predetermined order is repeatedly detected at least a predetermined threshold number of times.

According to an embodiment, in case that the plurality of emojis in the predetermined order is determined as being repeatedly detected at least a predetermined threshold number of times in operation 1320, the processor 210 may analyze information associated with an input context in which the plurality of emojis are used in operation 1330. For example, the processor 210 may analyze a condition (or information) associated with which application is executed, which user account is logged in, and/or who is a conversation partner when the plurality of emojis are input.

According to an embodiment, in case that the plurality of emojis in the predetermined order is determined as being repeatedly detected at least a predetermined threshold number of times in operation 1320, the processor 210 may analyze at least one attribute information of the plurality of emojis in operation 1340. For example, the processor 210 may recognize the subject (or context) of text input together with the plurality of emojis so as to extract attribute information. As another example, a category may be configured in advance for each emoji or metadata associated with an attribute may be tagged. The processor 210 may recognize categories and/or tagged information of the plurality of emojis, and may extract attribute information. In this instance, the attribute information determined in operation 1340 may be a singular piece of information or a plurality of pieces of information.

According to an embodiment, in case that the category or tagged information configured for each of the plurality of emojis is different from one another, the processor 210 may determine all of the plurality of configured categories or the plurality of pieces of tagged information as attribute information. As another example, in case that the category and the tagged information configured for each of the plurality of emojis is different from one another, the processor 210 may determine the largest number of categories or largest pieces of tagged information as attribute information or may determine the category of an emoji or tagged information which is input first as attribute information. As another embodiment, in case that the categories or tagged information configured for all emojis are different from each other, the processor 210 may not extract attribute information in operation 1340.

According to an embodiment, in operation 1350, the processor 210 may store the plurality of emojis as a single input pattern, together with the information associated with the input context analyzed in operation 1330 and/or the attribute information analyzed in operation 1340. According to an embodiment, by storing the input pattern of the emojis together with the information associated with the input context, the processor 210 may store an emoji pattern, which is used by a user, differently depending on the type of application being executed, information associated with a user of conversation, and/or information associated with a conversation partner. According to an embodiment, by storing the input pattern of the emojis together with the attribute information, the processor 210 may also store information associated with the subject of conversation when the input pattern is used.

Via the operations of FIG. 13, the processor 210 may store the emojis in a predetermined order that a user frequently uses as an input pattern, and may recommend the same to the user. According to an embodiment, the processor may store an input pattern, which a user uses, differently depending on input context (e.g., the type of an application being executed, user information of conversation, partner information of conversation), and may recommend an input pattern for each input context. According to an embodiment, the processor may store emojis in a predetermined order that a user uses, as an input pattern, together with attribute information, and may recommend emojis (i.e., an input pattern) in response to input of an item associated with attribute information.

Hereinafter, referring to FIG. 14, provided is a description associated with a method of configuring a single section in a series of conversation or a series of text in order to determine emojis to be configured as a single input pattern.

FIG. 14 is a diagram illustrating a method of detecting a plurality of emojis inconsecutively input in a single section of text and storing the same as a single input pattern, by the electronic device 200 according to an embodiment.

According to an embodiment, although a plurality of emojis are not input consecutively (i.e., although text input between emojis is present), a single section of text may be configured and input of a plurality of emojis in a predetermined order may be detected in the configured section. According to an embodiment, the processor 210 may determine a section of a series of text based on at least one of a subject of input text, a time at which text is input, and a place when text is input. For example, the processor 210 may analyze a subject (or context) of input text, a time at which text is input, and/or a place where text is input. In case that the subject (or context) of the input text is changed, that the interval between times at which text is input exceeds a predetermined threshold, or that the place where text is input is changed, the processor 210 may divide the text into different sections.

Referring to FIG. 14, in case that the interval between times at which text is input exceeds a predetermined threshold value, the processor 210 may determine the text as different sections based on the interval between times that exceeds the threshold value. For example, in case that the interval between times at which text is input exceeds 12 hours or 24 hours, the processor 210 may divide, based on the same, the text into different sections. As another example, in case that the date of the time at which the text is input is changed, that is, in case of midnight, the processor 210 may divide the text into different sections.

Referring to FIG. 14, in case that text is input at 12:39 on July 25^{th}, 2020, and subsequent text is input on July 27^{th}, 2020 in the state in which the account of Lindsey Smith is logged in a message application, the processor 210 may determine that the interval between times at which text is input exceeds a predetermined threshold value, and may divide, based on the same, the text into different sections. Accordingly, the processor 210 may detect a first emoji, a second emoji, and a third emoji inconsecutively input in a single text section. According to an embodiment, in case that input of the first emoji, the second emoji, and the third emoji is repeatedly detected at least a predetermined threshold number of times in the state in which the account of Lindsey Smith is logged in a message application, the processor 210 may store the first emoji, the second emoji, and the third emoji as a single input pattern, together with input context information associated with the message application and the Lindsey Smith user account. In this instance, the processor 210 may store the input pattern together with attribute information, smile, obtained by analyzing the first emoji, the second emoji, and the third emoji.

As described above, according to an embodiment, an electronic device (e.g., the electronic device 101 of FIG. 1, the electronic device 200 of FIG. 2) may include a display, a memory storing an input pattern including a plurality of emojis, and a processor electrically connected to the display and the memory, and the processor may be configured to display, in the display, a user interface including an input field, a recommendation field, and a character field, to detect a first input that selects a first emoji displayed in a first recommendation area among a plurality of recommendation areas included in the recommendation field, from among the plurality of emojis, to output the first emoji to the input field in response to detection of the first input, and to replace an item displayed in the first recommendation area with a second emoji subsequent to the first emoji in the input pattern.

According to an embodiment, the processor may be configured to detect a second input that selects the second emoji displayed in the first recommendation area, and to output the second emoji subsequently to the first emoji output to the input field in response to the detection of the second input.

According to an embodiment, the processor may be configured to determine whether a third emoji configured subsequently to the second emoji is present in the input pattern in response to the detection of the second input, to change the item displayed in the first recommendation area from the second emoji to the third emoji in case that the third emoji is present in the input pattern, and to replace the item displayed in the first recommendation area with a word recommended based on the emojis input to the input field or a character string input to the input field in case that the third emoji is not present in the input pattern.

According to an embodiment, the processor may be configured to determine whether a third emoji configured subsequently to the second emoji is present in the input pattern in response to detection of the second input, to change the item displayed in the first recommendation area from the second emoji to the third emoji in case that the third emoji is present in the input pattern, and to replace the item displayed in the first recommendation area with an emoji that is the first one among the plurality of emojis included in the input pattern in case that the third emoji is not present in the input pattern.

According to an embodiment, the input pattern may be stored together with attribute information obtained by analyzing the plurality of emojis, and the processor is configured to detect input of a word associated with the attribute information, to output the word to the input field in response to the detection of input of the word associated with the attribute information, and to replace the item displayed in the first recommendation area with an emoji that is the first one among the plurality of emojis included in the input pattern.

According to an embodiment, the input pattern may be stored together with attribute information obtained by analyzing the plurality of emojis, and the processor may be configured to detect input of an emoji that has attribute information same as or similar to the attribute information and is different from the plurality of emojis, to output, to the input field, the emoji different from the plurality of emojis in response to the detection of input of the emoji different from the plurality of emojis, and to replace the item displayed in the first recommendation area with an emoji that is the first one among the plurality of emojis included in the input pattern.

According to an embodiment, the processor may store, based on user settings, the plurality of emojis in a predetermined order as the input pattern.

According to an embodiment, in case that a plurality of emojis consecutively input in a predetermined order or a plurality of emojis inconsecutively input in a single section of text in a predetermined order is detected repeatedly at least a predetermined threshold number of times, the processor may store the plurality of emojis as the input pattern.

According to an embodiment, the processor may determine the section of the text based on at least one of a subject of the input text, a time at which the text is input, and a place where the text is input.

According to an embodiment, in case that the subject of the input text is changed, that an interval between times at which the text is input exceeds a predetermined threshold value, or that a place where the text is input is changed, the processor may divide the text into different sections.

As described above, according to an embodiment, a method of recommending an emoji by an electronic device (e.g., the electronic device 101 of FIG. 1, the electronic device 200 of FIG. 2) may include an operation of displaying, in a display of the electronic device, a user interface including an input field, a recommendation field, and a character field, an operation of detecting a first input that selects a first emoji displayed in a first recommendation area among a plurality of recommendation areas included in the recommendation field, from among a plurality of emojis included in an input pattern stored in a memory of the electronic device, an operation of outputting the first emoji to the input filed in response to the detection of the first input, and an operation of replacing an item displayed in the first recommendation area with a second emoji subsequent to the first emoji in the input pattern in response to the detection of the first input.

According to an embodiment, the emoji recommendation method of the electronic device may include an operation of detecting a second input that selects the second emoji displayed in the first recommendation area, an operation of outputting the second emoji subsequently to the first emoji output to the input field in response to the detection of the second input, an operation of determining whether a third emoji configured subsequently to the second emoji is present in the input pattern in response to the detection of the second input, an operation of changing the item displayed in the first recommendation area from the second emoji to the third emoji in case that the third emoji is present in the input pattern, and an operation of replacing the item displayed in the first recommendation area with a word recommended based on the emojis input to the input field or a character string input to the input field in case that the third emoji is not present in the input pattern.

According to an embodiment, the emoji recommendation method of the electronic device may include an operation of detecting input of a word associated with attribute information obtained by analyzing the plurality of emojis, the attribute information being stored together with the input pattern, an operation of outputting the word to the input field in response to the detection of input of the word associated with the attribute information, and an operation of replacing the item displayed in the first recommendation area with an emoji that is the first one among the plurality of emojis included in the input pattern in response to the detection of input of the word associated with the attribute information.

According to an embodiment, the emoji recommendation method of the electronic device may include an operation of detecting input of an emoji that has attribute information same as or similar to the attribute information obtained by analyzing the plurality of emojis and is different from the plurality of emojis, the attribute information being stored together with the input pattern, an operation of outputting, to the input field, the emoji different from the plurality of emojis in response to the detection of input of the emoji different from the plurality of emojis, and an operation of replacing the item displayed in the first recommendation area with an emoji that is the first one among the plurality of emojis included in the input pattern in response to the detection of input of the emoji different from the plurality of emojis.

According to an embodiment, in case that a plurality of emojis consecutively input in a predetermined order or a plurality of emojis inconsecutively input in a single section of text in a predetermined order is detected repeatedly at least a predetermined threshold number of times, the plurality of emojis in the predetermined order may be stored as a single pattern in the memory.

As described above, according to an embodiment, an electronic device (e.g., the electronic device 101 of FIG. 1, the electronic device 200 of FIG. 2) may include a display, a memory storing an input pattern including a plurality of emojis together with information associated with input context, and a processor electrically connected to the display and the memory, and the processor may be configured to display a user interface including an input field, a recommendation field, and a character field, to detect a first input that selects a first emoji displayed in a first recommendation area included in the recommendation field, from among the plurality of emojis, in the input context, to output the first emoji to the input field in response to the detection of the first input in the input context, and to replace an item displayed in the first recommendation area with a second emoji subsequent to the first emoji in the input pattern.

According to an embodiment, the processor may store, based on user settings, a plurality of emojis in a predetermined order as the input pattern, together with information associated with input context, and information associated with the input context may include at least one of application type information, user account information, and partner information of conversation.

According to an embodiment, in case that a plurality of emojis consecutively input in a predetermined order or a plurality of emojis inconsecutively input in a single section of text in a predetermined order is detected at least a predetermined threshold number of times, the processor may store the plurality of emojis as the input pattern together with information associated with input context, and information associated with the input context may include at least one of application type information, user account information, and partner information of conversation.

According to an embodiment, the processor may detect a second input that selects the second emoji displayed in the first recommendation area in the input context, may output the second emoji subsequently to the first emoji output to the input field in response to the detection of the second input in the input context, may determine whether a third emoji configured subsequently to the second emoji is present in the input pattern, may change the item displayed in the first recommendation area from the second emoji to the third emoji in case that the third emoji is present in the input pattern, and may replace the item displayed in the first recommendation area with a word recommended based on the emojis input to the input field or a character string input to the input field in case that the third emoji is not present in the input pattern.

According to an embodiment, the input pattern may be stored together with attribute information obtained by analyzing the plurality of emojis, and the processor may be configured to detect input of a word associated with the attribute information, to output the word to the input field in response to the detection of input of the word in the input context, and to replace the item displayed in the first recommendation area with an emoji that is the first one among the plurality of emojis included in the input pattern.

## Claims

1. An electronic device comprising:
a display;
a memory storing an input pattern including a plurality of emojis; and
a processor electrically connected to the display and the memory,
wherein the processor is configured to:
display, in the display, a user interface including an input field, a recommendation field, and a character field;
detect a first input that selects a first emoji displayed in a first recommendation area among a plurality of recommendation areas included in the recommendation field, from among the plurality of emojis;
output the first emoji to the input field in response to detection of the first input; and
replace an item displayed in the first recommendation area with a second emoji subsequent to the first emoji in the input pattern.

2. The electronic device of claim 1, wherein the processor is configured to:
detect a second input that selects the second emoji displayed in the first recommendation area; and
output the second emoji subsequently to the first emoji output to the input field in response to the detection of the second input.

3. The electronic device of claim 2, wherein the processor is configured to:
determine whether a third emoji configured subsequently to the second emoji is present in the input pattern in response to the detection of the second input;
change the item displayed in the first recommendation area from the second emoji to the third emoji in case that the third emoji is present in the input pattern; and
replace the item displayed in the first recommendation area with a word recommended based on the emojis input to the input field or a character string input to the input field in case that the third emoji is not present in the input pattern.

4. The electronic device of claim 2, wherein the processor is configured to:
determine whether a third emoji configured subsequently to the second emoji is present in the input pattern in response to the detection of the second input;
change the item displayed in the first recommendation area from the second emoji to the third emoji in case that the third emoji is present in the input pattern; and
replace the item displayed in the first recommendation area with an emoji that is a first one among the plurality of emojis included in the input pattern in case that the third emoji is not present in the input pattern.

5. The electronic device of claim 1, wherein the input pattern is stored together with attribute information obtained by analyzing the plurality of emojis, and
wherein the processor is configured to:
detect input of a word associated with the attribute information;
output the word to the input field in response to the detection of input of the word associated with the attribute information; and
replace the item displayed in the first recommendation area with an emoji that is a first one among the plurality of emojis included in the input pattern.

6. The electronic device of claim 1, wherein the input pattern is stored together with attribute information obtained by analyzing the plurality of emojis, and
wherein the processor is configured to:
detect input of an emoji that has attribute information same as or similar to the attribute information and is different from the plurality of emojis;
output, to the input field, the emoji different from the plurality of emojis in response to the detection of input of the emoji different from the plurality of emojis; and
replace the item displayed in the first recommendation area with an emoji that is a first one among the plurality of emojis included in the input pattern.

7. The electronic device of claim 1, wherein the processor is configured to, in case that a plurality of emojis consecutively input in a predetermined order or a plurality of emojis inconsecutively input in a single section of text in a predetermined order is detected repeatedly at least a predetermined threshold number of times, store the plurality of emojis as the input pattern.

8. The electronic device of claim 7, wherein the processor is configured to determine the section of the text based on at least one of a subject of input text, a time at which the text is input, and a place where the text is input.

9. The electronic device of claim 8, wherein the processor is configured to, in case that the subject of the input text is changed, that an interval between times at which the text is input exceeds a predetermined threshold value, or that a place where the text is input is changed, divide the text into different sections.

10. A method of recommending an emoji by an electronic device, the method comprising:
displaying, in a display of the electronic device, a user interface including an input field, a recommendation field, and a character field;
detecting a first input that selects a first emoji displayed in a first recommendation area among a plurality of recommendation areas included in the recommendation field, from among a plurality of emojis included in an input pattern stored in a memory of the electronic device;
outputting the first emoji to the input filed in response to the detection of the first input; and
replacing an item displayed in the first recommendation area with a second emoji subsequent to the first emoji in the input pattern in response to the detection of the first input.

11. The method of claim 10, further comprising:
detecting a second input that selects the second emoji displayed in the first recommendation area;
outputting the second emoji subsequently to the first emoji output to the input field in response to the detection of the second input;
determining whether a third emoji configured subsequently to the second emoji is present in the input pattern in response to the detection of the second input;
changing the item displayed in the first recommendation area from the second emoji to the third emoji in case that the third emoji is present in the input pattern; and
replacing the item displayed in the first recommendation area with a word recommended based on the emojis input to the input field or a character string input to the input field in case that the third emoji is not present in the input pattern.

12. The method of claim 10, further comprising:
detecting input of a word associated with attribute information obtained by analyzing the plurality of emojis, the attribute information being stored together with the input pattern;
outputting the word to the input field in response to the detection of input of the word associated with the attribute information; and
replacing the item displayed in the first recommendation area with an emoji that is a first one among the plurality of emojis included in the input pattern in response to the detection of input of the word associated with the attribute information.

13. The method of claim 10, further comprising:
detecting input of an emoji that has attribute information same as or similar to the attribute information obtained by analyzing the plurality of emojis and is different from the plurality of emojis, the attribute information being stored together with the input pattern;
outputting, to the input field, the emoji different from the plurality of emojis in response to the detection of input of the emoji different from the plurality of emojis; and
replacing the item displayed in the first recommendation area with an emoji that is a first one among the plurality of emojis included in the input pattern in response to the detection of input of the emoji different from the plurality of emojis.

14. The method of claim 10, wherein, in case that a plurality of emojis consecutively input in a predetermined order or a plurality of emojis inconsecutively input in a single section of text in a predetermined order is detected repeatedly at least a predetermined threshold number of times, the plurality of emojis in the predetermined order are stored as a single pattern in the memory.

15. An electronic device comprising:
a display;
a memory storing an input pattern including a plurality of emojis together with information associated with input context; and
a processor electrically connected to the display and the memory,
wherein the processor is configured to:
display a user interface including an input field, a recommendation field, and a character field;
detect a first input that selects a first emoji displayed in a first recommendation area included in the recommendation field, from among the plurality of emojis, in the input context;
output the first emoji to the input field in response to the detection of the first input in the input context; and
replace an item displayed in the first recommendation area with a second emoji subsequent to the first emoji in the input pattern, and
wherein information associated with the input context comprises at least one of application type information, user account information, and conversation partner information.
